(19) Europäisches Patentamt
European Patent Office
Office européen des brevets

(11) **EP 4 564 813 A1**

(12) **EUROPEAN PATENT APPLICATION**
published in accordance with Art. 153(4) EPC

(43) Date of publication:
**04.06.2025 Bulletin 2025/23**

(51) International Patent Classification (IPC):
**H04N 19/124** (2014.01)

(21) Application number: **23845575.2**

(86) International application number:
**PCT/CN2023/109231**

(22) Date of filing: **26.07.2023**

(87) International publication number:
**WO 2024/022367 (01.02.2024 Gazette 2024/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.07.2022 CN 202210886294
15.08.2022 CN 202210976078**

(71) Applicant: **Hangzhou Hikvision Digital
Technology Co., Ltd.
Hangzhou, Zhejiang 310051 (CN)**

(72) Inventors:
• **WEI, Liang
  Hangzhou, Zhejiang 310051 (CN)**
• **CHEN, Fangdong
  Hangzhou, Zhejiang 310051 (CN)**
• **WANG, Li
  Hangzhou, Zhejiang 310051 (CN)**
• **WU, Xiaoyang
  Hangzhou, Zhejiang 310051 (CN)**

(74) Representative: **Goddar, Heinz J.
Boehmert & Boehmert
Anwaltspartnerschaft mbB
Pettenkoferstrasse 22
80336 München (DE)**

(54) **IMAGE DECODING METHOD AND APPARATUS, AND IMAGE CODING METHOD AND APPARATUS**

(57) Disclosed in the present application are an image decoding method and apparatus, and an image coding method and apparatus. The image decoding method comprises: determining a predicted residual of a first pixel point according to a prediction mode of the first pixel point, wherein the predicted residual is used for reflecting the gradient of the first pixel point, the prediction mode is used for indicating the position of a reconstructed pixel point referenced when pixel points are predicted, and the first pixel point is any pixel point in the current coding block; determining a target quantization parameter (QP) value of the first pixel point according to the predicted residual of the first pixel point; and performing dequantization on the first pixel point according to the target QP value of the first pixel point.

FIG. 5

**Description**

**CROSS-REFERENCE TO RELATED APPLICATION**

This application claims priority to Chinese Patent Application No. 202210886294.7 filed on July 26, 2022 and Chinese Patent Applications No. 202210976078.1, 202310454346.8 and 202310454020.5 filed on August 15, 2022, respectively. Chinese Patent Applications No. 202310454346.8 and 202310454020.5 are divisions of Chinese Patent Application No. 202210976078.1, and Chinese Patent Application No. 202210976078.1 claims priority to Chinese Patent Application No. 202210886294.7. The entire contents of which are incorporated herein by reference.

**TECHNICAL FIELD**

The present disclosure relates to the field of computer video processing technologies, and in particular to a picture decoding method and apparatus, and a picture coding method and apparatus.

**BACKGROUND**

In the field of video coding and decoding, video compression (that is, video coding and decoding) technologies can compress a data volume of a video, thereby realizing efficient transmission or storage of the video.

Performing coding and decoding on the video refers to performing coding and decoding on each frame of picture in the video. Taking a frame of picture as an example, at a coding device, a picture encoder performs coding on the picture to obtain a bitstream corresponding to the picture, and transmits the bitstream to a decoding device; and at the decoding device, a picture decoder parses the bitstream to obtain the picture. At present, the picture is divided into one or more coding units (CUs), the picture encoder predicts each of the CUs, determines a residual value between a predicted value of the CU and a true value of the CU, and sequentially transforms, quantizes and encodes the residual value to obtain the bitstream. Correspondingly, the picture decoder predicts each of the CUs, sequentially performs dequantization and inverse transform on a decoding result of the bitstream corresponding to the CU to obtain the residual value corresponding to the CU, and calculates a sum of the predicted value and the residual value of the CU to obtain a reconstructed value of the CU.

In a process of picture coding and decoding, quantization can realize a many-to-one mapping of signal values, thereby effectively reducing the signal value space and obtaining relatively good compression effects. It can be understood that the coding device and the decoding device perform quantization and dequantization processes according to quantization parameters (QPs). At present, a QP is set for a CU, the coding device obtains the QP of each CU, and performs quantization on a residual value or a transform coefficient of the CU according to the QP; and correspondingly, the decoding device obtains the QP of the CU, and performs dequantization on a quantized coefficient parsed from the bitstream according to the QP. However, quantization is performed on all pixel points in a CU using the same QP, that is, a same degree of quantization is performed on all pixel points in the CU, resulting in relatively large quantization distortion (quantization distortion can be understood as picture distortion caused by quantization) in the process of picture coding and decoding.

**SUMMARY**

The present disclosure provides a picture decoding method and apparatus, and a picture coding method and apparatus, which may reduce the decoding distortion of picture frames in the case of ensuring a certain compression rate, and may improve the authenticity and accuracy of picture decoding.

In order to achieve the above objectives, embodiments of the present disclosure adopt the following technical solutions.

In a first aspect, the embodiments of the present disclosure provide a picture decoding method, performed by a decoding device, including: determining a predicted residual value of a first pixel point according to a prediction manner of the first pixel point, where the predicted residual value is configured to reflect a gradient of the first pixel point, the prediction manner is configured to indicate a position of one or more reconstructed pixel points referenced when performing prediction on a pixel point, and the first pixel point is any pixel point in a current coding block; determining a target quantization parameter (QP) value of the first pixel point according to the predicted residual value of the first pixel point; and performing dequantization on the first pixel point according to the target QP value of the first pixel point.

According to the picture decoding method provided in the embodiments of the present disclosure, a video decoder may determine the predicted residual value (reflecting the gradient of the first pixel point) of each pixel point according to the prediction manner (the prediction manner is configured to indicate the position of one or more reconstructed pixel points referenced when performing prediction on the pixel point) of each pixel point in the coding block, then determine a QP value of a pixel point granularity for each pixel point in the coding block, and perform dequantization on each pixel point according to the QP value of each pixel point, that is, dequantization is performed pixel by pixel, and thus the decoding distortion of picture frames may be reduced in the case of ensuring a certain compression rate, and the authenticity and accuracy of picture decoding may be improved.

The gradient of a pixel point is configured to represent a difference between the pixel point with pixel points surrounding the pixel point, and may reflect the complexity of the pixel point (for example, texture characteristics).

In a possible implementation, the predicted residual value of the first pixel point includes a target value or an average value of target values, where the target value is a gradient of one or more reconstructed pixel points surrounding the first pixel point, or the target value is an absolute value of the gradient of the one or more reconstructed pixel points surrounding the first pixel point, or the target value is a residual value of the one or more reconstructed pixel points surrounding the first pixel point after performing dequantization, or the target value is an absolute value of the residual value of the one or more reconstructed pixel points surrounding the first pixel point after performing dequantization.

In a possible implementation, the prediction manner includes: performing prediction according to reconstructed pixel points on a left side and a right side of the pixel point; and/or performing prediction according to reconstructed pixel points on an upper side and a lower side of the pixel point; and/or performing prediction according to one or more reconstructed pixel points on the left side of the pixel point; and/or performing prediction according to one or more reconstructed pixel points on the upper side of the pixel point.

In another possible implementation, the prediction manner of the first pixel point is to perform prediction according to the reconstructed pixel points on the left side and the right side of the pixel point, and determining the predicted residual value of the first pixel point according to the prediction manner of the first pixel point includes: calculating a difference between a pixel value of a second pixel point and a pixel value of a third pixel point as a first difference value, or taking a residual value of the second pixel point after performing dequantization as the first difference value, where the second pixel point is a first reconstructed pixel point on a left side of the first pixel point, and the third pixel point is a first reconstructed pixel point on an upper side of the second pixel point; calculating a difference between a pixel value of a fourth pixel point and a pixel value of a fifth pixel point as a second difference value, or taking a residual value of the fourth pixel point after performing dequantization as the second difference value, where the fourth pixel point is a first reconstructed pixel point on a right side of the first pixel point, and the fifth pixel point is a first reconstructed pixel point on an upper side of the fourth pixel point; and taking an average value of an absolute value of the first difference value and an absolute value of the second difference value as the predicted residual value of the first pixel point.

In another possible implementation, the prediction manner of the first pixel point is to perform prediction according to the reconstructed pixel points on the upper side and the lower side of the pixel point, and determining the predicted residual value of the first pixel point according to the prediction manner of the first pixel point includes: calculating a difference between a pixel value of a sixth pixel point and a pixel value of a seventh pixel point as a third difference value, where the sixth pixel point is a first reconstructed pixel point on an upper side of the first pixel point, and the seventh pixel point is a first reconstructed pixel point on a left side of the sixth pixel point; calculating a difference between a pixel value of an eighth pixel point and a pixel value of a ninth pixel point as a fourth difference value, or taking a residual value of the eighth pixel point after performing dequantization as the fourth difference value, where the eighth pixel point is a first reconstructed pixel point on a lower side of the first pixel point, and the ninth pixel point is a first reconstructed pixel point on a left side of the eighth pixel point; and taking an average value of an absolute value of the third difference value and an absolute value of the fourth difference value as the predicted residual value of the first pixel point.

In another possible implementation, the prediction manner of the first pixel point is to perform prediction according to the one or more reconstructed pixel points on the left side of the pixel point, and determining the predicted residual value of the first pixel point according to the prediction manner of the first pixel point includes: taking an absolute value of a difference between a pixel value of a tenth pixel point and a pixel value of an eleventh pixel point as the predicted residual value of the first pixel point, where the tenth pixel point is a first reconstructed pixel point on a left side of the first pixel point, and the eleventh pixel point is a first reconstructed pixel point on a left side of the tenth pixel point; or taking an absolute value of a difference between the pixel value of the tenth pixel point and a pixel value of a twelfth pixel point as the predicted residual value of the first pixel point, where the twelfth pixel point is a first reconstructed pixel point on an upper side of the tenth pixel point; or taking an absolute value of a residual value of the tenth pixel point after performing dequantization as the predicted residual value of the first pixel point.

In another possible implementation, the prediction manner of the first pixel point is to perform prediction according to the one or more reconstructed pixel points on the upper side of the pixel point, and determining the predicted residual value of the first pixel point according to the prediction manner of the first pixel point includes: taking an absolute value of a difference between a pixel value of a thirteenth pixel point and a pixel value of a fourteenth pixel point as the predicted residual value of the first pixel point, where the thirteenth pixel point is a first reconstructed pixel point on an upper side of the first pixel point, and the fourteenth pixel point is a first reconstructed pixel point on an upper side of the thirteenth pixel point; or taking an absolute value of a residual value of the thirteenth pixel point after performing dequantization as the predicted residual value of the first pixel point.

In another possible implementation, the method further includes: determining a predicted QP value of the first pixel point, where the predicted QP value of the first pixel point is a QP value of the current coding block; determining the target QP value of the first pixel point according to the predicted residual value of the first pixel point includes: in response to the first pixel point being a target pixel point in the current coding block, adjusting the predicted QP value of the first pixel point according to the predicted residual value to obtain the target QP value of the first pixel point, where the target pixel point is a preset pixel point for adjusting the QP value; or in response to the first pixel point being a pixel point other than the target pixel point in the current coding block, taking the predicted QP value of the first pixel point as the target QP value.

In another possible implementation, adjusting the predicted QP value of the first pixel point according to the predicted residual value to obtain the target QP value of the first pixel point includes: in response to the predicted QP value of the first pixel point being greater than or equal to a first threshold and less than or equal to a second threshold and the predicted residual value of the first pixel point being less than or equal to a third threshold, adjusting the predicted QP value of the first pixel point to obtain the target QP value, where the target QP value is less than the predicted QP value; and otherwise, taking the predicted QP value of the first pixel point as the target QP value of the first pixel point.

In another possible implementation, the first threshold is a QP value corresponding to just noticeable distortion, and the second threshold is an adjustable maximum QP value.

In another possible implementation, adjusting the predicted QP value of the first pixel point to obtain the target QP value of the first pixel point includes: taking a larger value of a QP value obtained by subtracting a preset offset from the predicted QP value and the QP value corresponding to just noticeable distortion as the target QP value.

In another possible implementation, the QP value corresponding to just noticeable distortion is determined according to a bit depth of the first pixel point in a target channel or a channel index of the first pixel point.

In another possible implementation, the adjustable maximum QP value is determined according to one or more of the bit depth of the first pixel point in the target channel, the channel index of the first pixel point and a filling degree of a bitstream buffer.

In another possible implementation, the third threshold is determined according to one or more of the bit depth of the first pixel point in the target channel, the channel index of the first pixel point and a texture complexity of the current coding block.

In another possible implementation, the preset offset is determined according to one or more of the bit depth of the first pixel point in the target channel, the channel index of the first pixel point, the filling degree of the bitstream buffer and the texture complexity of the current coding block.

In another possible implementation, the current coding block includes at least a first part of pixel points and/or a second part of pixel points, where the first part of pixel points are set as pixel points whose QP values do not need to be adjusted, the second part of pixel points are set as pixel points whose QP values need to be adjusted, the first part of pixel points and the second part of pixel points are determined according to a pixel-wise prediction mode of the current coding block, and the target pixel point is any one or more pixel points in the second part of pixel points.

In another possible implementation, the pixel-wise prediction mode of the current coding block includes: mode 1 and mode 2, where the mode 1 is a vertical prediction mode configured to process vertical textures, and the mode 2 is a horizontal prediction mode configured to process horizontal textures. In the case that the pixel-wise prediction mode of the current coding block is the mode 1, the second part of pixel points include at least one of the following: a first type of pixel points or a fourth type of pixel points that are not a first row, where the first type of pixel points are pixel points that prediction is performed according to reconstructed pixel points on the left side and the right side of the pixel point, and the fourth type of pixel points are pixel points that prediction is performed according to one or more reconstructed pixel points on the upper side of the pixel point. In the case that the pixel-wise prediction mode of the current coding block is the mode 2, the second part of pixel points include at least one of the following: a second type of pixel points that are not a first column, a third type of pixel points that are not a first column and the fourth type of pixel points that are not the first row, where the second type of pixel points are pixel points that prediction is performed according to reconstructed pixel points on the upper side and the lower side of the pixel point, and the third type of pixel points are pixel points that prediction is performed according to one or more reconstructed pixel points on the left side of the pixel point.

In a second aspect, the embodiments of the present disclosure provide a picture coding method, performed by a coding device, including: determining a predicted residual value of a first pixel point according to a prediction manner of the first pixel point, where the predicted residual value is configured to reflect a gradient of the first pixel point, the prediction manner is configured to indicate a position of one or more reconstructed pixel points referenced when performing prediction on a pixel point, and the first pixel point is any pixel point in a current coding block; determining a target quantization parameter (QP) value of the first pixel point according to the predicted residual value of the first pixel point; and performing quantization on the first pixel point according to the target QP value of the first pixel point.

According to the picture coding method provided in the embodiments of the present disclosure, a video encoder can determine the predicted residual value (reflecting the gradient of the first pixel point) of each pixel point according to the prediction manner (the prediction manner is configured to indicate a position of one or more reconstructed pixel points referenced when performing prediction on the pixel point) of each pixel point in the coding block, then determine a QP value of a pixel point granularity for each pixel point in the coding block, and perform quantization on each pixel point according to the QP value of each pixel point, that is, quantization is performed pixel by pixel, and thus the decoding distortion of picture frames may be reduced in the case of ensuring a certain compression rate, and the authenticity and accuracy of picture decoding may be improved.

It can be understood that each step in the picture coding method is an inverse operation of the above picture decoding method, and thus the inverse operation can be performed on various possible implementations in the picture coding method with reference to descriptions of various possible implementations in the picture decoding method, which will not be repeated here.

In a third aspect, the embodiments of the present disclosure provide a picture decoding apparatus, deployed in a decoding device, including various modules configured to implement the method in one of the first aspect and the possible implementations of the first aspect, for example, a determination unit and a dequantization unit.

The technical solutions and beneficial effects of the third aspect can refer to the descriptions of any one of the first aspect and the possible implementations of the first aspect, which will not be repeated here. The picture decoding apparatus has functions of implementing behavior in the method example of any one of the above first aspect and the possible implementations of the first aspect. The functions may be implemented by hardware, or may be implemented by hardware executing corresponding software. The hardware or the software includes one or more modules corresponding to the foregoing functions.

In a fourth aspect, the embodiments of the present disclosure provide a picture coding apparatus, deployed in a coding device, including various modules configured to implement the method in one of the second aspect and the possible implementations of the second aspect, for example, a determination unit and a quantization unit.

The technical solutions and beneficial effects of the fourth aspect can refer to the descriptions of any one of the second aspect and the possible implementations of the second aspect, which will not be repeated here. The picture decoding apparatus has functions of implementing behavior in the method example of any one of the above second aspect and the possible implementations of the second aspect. The functions may be implemented by hardware, or may be implemented by hardware executing corresponding software. The hardware or the software includes one or more modules corresponding to the foregoing functions.

In a fifth aspect, the embodiments of the present disclosure provide an electronic device, including a processor and a memory, where the memory is configured to store computer instructions, and the processor is configured to call and run the computer instructions from the memory to implement the method according to any one of the first aspect to the second aspect, the possible implementations of the first aspect and the possible implementations of the second aspect.

For example, the electronic device may refer to a video encoder or a coding device including the video encoder.

For another example, the electronic device may refer to a video decoder or a decoding device including the video decoder.

In a sixth aspect, the embodiments of the present disclosure provide a computer readable storage medium, storing a computer program or instruction thereon, and when the computer program or instruction is executed by a computing device or a storage system where the computing device is located, the method according to any one of the first aspect to the second aspect, the possible implementations of the first aspect and the possible implementations of the second aspect is implemented.

In a seventh aspect, the embodiments of the present disclosure provide a computer program product, including instructions, where the computer program product, when run on a computing device or a processor, causes the computing device or the processor to execute the instructions to implement the method according to any one of the first aspect to the second aspect, the possible implementations of the first aspect and the possible implementations of the second aspect.

In an eighth aspect, the embodiments of the present disclosure provide an apparatus, including a memory and a processor, where the memory is configured to store computer instructions, and the processor is configured to call and run the computer instructions from the memory to implement the method according to any one of the first aspect to the second aspect, the possible implementations of the first aspect and the possible implementations of the second aspect.

In a ninth aspect, the embodiments of the present disclosure provide a video coding system, including a coding device and a decoding device, where the decoding device is configured to implement the method according to any one of the first aspect and the possible implementations of the first aspect, and the coding device is configured to implement the method according to any one of the second aspect and the possible implementations of the second aspect.

In the embodiments of the present disclosure, combination may be made on a basis of implementations provided in the foregoing aspects, so as to provide more implementations.

## BRIEF DESCRIPTION OF THE DRAWINGS

FIG. 1 is a schematic block diagram of a video coding system according to an embodiment of the present disclosure.

FIG. 2 is a schematic block diagram of a video encoder according to an embodiment of the present disclosure.

FIG. 3 is a schematic block diagram of a video decoder according to an embodiment of the present disclosure.

FIG. 4 is a schematic flowchart of a video coding/decoding process according to an embodiment of the present disclosure.

FIG. 5 is a schematic flowchart of a picture decoding method according to an embodiment of the present disclosure.

FIG. 6 is a schematic flowchart of another picture decoding method according to an embodiment of the present disclosure.

FIG. 7 is a schematic diagram of a distribution of pixel points according to an embodiment of the present disclosure.

FIG. 8 is a schematic diagram of a pixel point division in a pixel-wise prediction mode according to an embodiment of the present disclosure.

FIG. 9 is a schematic diagram of another pixel point division in a pixel-wise prediction mode according to an embodiment of the present disclosure.

FIG. 10 is a schematic diagram of a yet another pixel point division in a pixel-wise prediction mode according to an embodiment of the present disclosure.

FIG. 11 is a schematic diagram of a still another pixel point division in a pixel-wise prediction mode according to an embodiment of the present disclosure.

FIG. 12 is a schematic diagram of a still another pixel point division in a pixel-wise prediction mode according to an embodiment of the present disclosure.

FIG. 13 is a schematic flowchart of a yet another picture decoding method according to an embodiment of the present disclosure.

FIG. 14 is a schematic flowchart of a still another picture decoding method according to an embodiment of the present disclosure.

FIG. 15 is a schematic diagram of a still another pixel point division in a pixel-wise prediction mode according to an embodiment of the present disclosure.

FIG. 16 is a schematic flowchart of a picture coding method according to an embodiment of the present disclosure.

FIG. 17 is a schematic structural diagram of a picture decoding apparatus according to an embodiment of the present disclosure.

FIG. 18 is a schematic structural diagram of a picture coding apparatus according to an embodiment of the present disclosure.

FIG. 19 is a schematic structural diagram of an electronic device according to an embodiment of the present disclosure.

## DETAILED DESCRIPTION OF THE EMBODIMENTS

The term "and/or" in this specification describes only an association relationship for describing associated objects and represents that three relationships may exist. For example, A and/or B may represent the following three cases: only A exists, both A and B exist, and only B exists.

In this specification and the accompanying drawings of the present disclosure, the terms "first", "second", and the like are intended to distinguish different objects, or to distinguish different processing of a same object, rather than to describe a specific order of the objects.

In addition, the terms "including", "having", and any other variants thereof mentioned in descriptions of the present disclosure are intended to cover a non-exclusive inclusion. For example, a process, a method, a system, a product, or a device that includes a series of steps or units is not limited to listed steps or units, but optionally further includes other unlisted steps or units, or optionally further includes another inherent step or unit of the process, the method, the product, or the device.

It should be noted that in the embodiments of the present disclosure, words such as "exemplary" or "for example" are used to represent an example, an illustration, or a description. Any embodiment or design solution described as "exemplary" or "for example" in the embodiments of the present disclosure should not be construed as being more preferred or having more advantages than another embodiment or design solution. Specifically, the use of the words such as "exemplary" or "for example" is intended to present a relative concept in a specific manner.

In the descriptions of the present disclosure, unless otherwise stated, "a plurality of" means two or more.

The picture decoding method and picture coding method according to the embodiments of the present disclosure can also be used for video decoding and video coding. It should be understood that a video includes a series of pictures, and decoding and coding are performed on the video essentially refers to performing decoding and coding on all the pictures included in the video.

It can be understood that quantization involved in the process of picture coding refers to a process of mapping continuous values (or a large number of discrete values) of a signal into a finite number of discrete values, and quantization can realize a many-to-one mapping of signal values. In video coding, a transform coefficient often has a relatively large dynamic range after a residual signal is transformed, and thus the signal value space may be effectively reduced and better compression effect may be obtained by performing quantization on the transform coefficient. However, due to the many-to-one mapping mechanism, the process of the quantization will inevitably introduce distortion, which is the fundamental reason for the distortion in video coding.

Dequantization is an inverse process of quantization. Dequantization refers to mapping a quantized coefficient to a reconstructed signal in an input signal space. The reconstructed signal is an approximation of an input signal.

Quantization includes scalar quantization (SQ) and vector quantization. Scalar quantization is the most basic quantization method, and an input of scalar quantization is a one-dimensional scalar signal. A process of scalar quantization includes: firstly, dividing an input signal space into a series of disjoint intervals, and selecting a representative signal for each of the series of disjoint intervals; then for each input signal, the input signal is scalar quantized into the representative signal of the interval where the input signal is located. A length of the interval is called a quantization step (Qstep), an index of the interval is a level value (Level), that is, a quantized value; and a parameter representing the quantization step is a quantization parameter (QP).

The simplest scalar quantization method is uniform scalar quantization, which divides the input signal space into equidistant intervals, and the representative signal of each of the equidistant intervals is a midpoint of the interval.

The optimal scalar quantizer is Lloyd-Max quantizer, which considers the distribution of input signals, and the division of intervals is non-uniform. The representative signal of each of the intervals is a probability centroid of the interval, and a boundary point of two adjacent intervals is a midpoint of the representative signals of the two intervals.

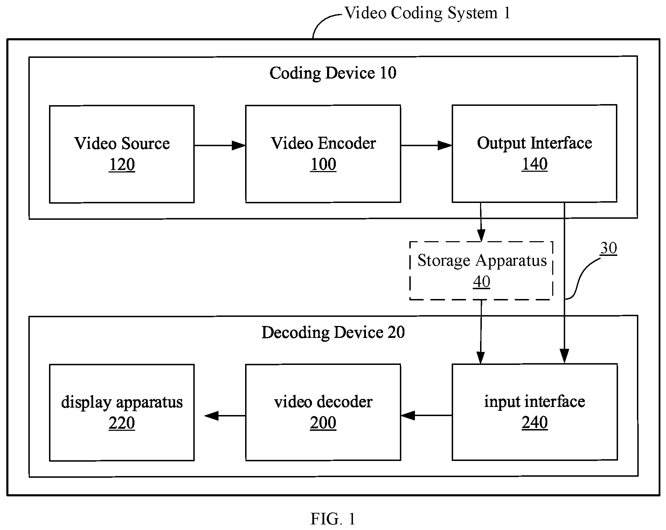

The following describes a system architecture applied in the embodiments of the present disclosure. FIG. 1 is a schematic block diagram of a video coding system according to an embodiment of the present disclosure. As used herein, the term "video coder" usually refers to both a video encoder and a video decoder. In the present disclosure, the term "video coding" or "coding" may usually refer to video encoding or video decoding. A video encoder 100 and a video decoder 200 in a video coding system 1 are configured to predict motion information, for example, a motion vector, of a current coded picture block or a subblock of the current coded picture block according to various method examples described based on any one of a plurality of new inter-frame prediction modes provided in the present disclosure, so that the predicted motion vector approximates, to a greatest extent, to a motion vector obtained by using a motion estimation method, and a motion vector difference does not need to be transmitted during coding, thereby further improving the coding and decoding performance.

As shown in FIG. 1, the video coding system 1 includes a coding device 10 and a decoding device 20. The coding device 10 generates encoded video data, and thus the coding device 10 may be referred to as a video coding apparatus. The decoding device 20 may decode the encoded video data generated by the coding device 10, and thus the decoding device 20 may be referred to as a video decoding apparatus. Various embodiments of the coding device 10, the decoding device 20 or both the coding device 10 and the decoding device 20 may include one or more processors and a memory coupled to the one or more processors. The memory may include but is not limited to a random access memory (RAM), a read-only memory (ROM), an electrically erasable programmable read-only memory (EEPROM), a flash memory, or any other media that can be used to store required program code in a form of an instruction or a data structure and that can be accessed by a computer, as described herein.

The coding device 10 and the decoding device 20 may include various apparatuses, including a desktop computer, a mobile computing apparatus, a notebook (for example, laptop) computer, a tablet computer, a set top box, a handheld telephone set such as a "smart" phone, a television set, a camera, a display apparatus, a digital media player, a video game console, an in-vehicle computer, or the like.

The decoding device 20 may receive the encoded video data from the coding device 10 via a link 30. The link 30 may include one or more media or apparatuses that can transfer the encoded video data from the coding device 10 to the decoding device 20. In an embodiment, the link 30 may include one or more communication media that enable the coding device 10 to directly transmit the encoded video data to the decoding device 20 in real time. In this embodiment, the coding device 10 may modulate the encoded video data according to a communication standard (for example, a wireless communication protocol), and may transmit modulated video data to the decoding device 20. The communication media may include a wireless and/or wired communication media, for example, a radio frequency (RF) spectrum or one or more physical transmission lines. The communication media may constitute a part of a packet-based network, and the packet-based network is, for example, a local area network, a wide area network, or a global network (for example, an internet). The communication media may include a router, a switch, a base station, or another device facilitating communication from the coding device 10 to the decoding device 20.

In another example, encoded data may be output from an output interface 140 to a storage apparatus 40. Similarly, the encoded data can be accessed from the storage apparatus 40 through an input interface 240. The storage apparatus 40 may include any one of a variety of distributed or locally accessed data storage media, for example, a hard disk drive, a Blu-ray disc, a digital video disc (DVD), a compact disc read-only memory (CD-ROM), a flash memory, a volatile or nonvolatile memory, or any other suitable digital storage media for storing the encoded video data.

In another example, the storage apparatus 40 may correspond to a file server or another intermediate storage apparatus capable of storing the encoded video data generated by the coding device 10. The decoding device 20 may access the stored video data from the storage apparatus 40 through streaming transmission or downloading transmission. The file server may be any type of server that can store the encoded video data and transmit the encoded video data to the decoding device 20. In an embodiment, the file server includes a network server (for example, used for a website), a file transfer protocol (FTP) server, a network attached storage (NAS) apparatus or a local disk drive. The decoding device 20 may access the encoded video data through any standard data connection (including an internet connection). The standard data connection may include a wireless channel (for example, a wireless-fidelity (Wi-Fi) connection), a wired connection (for example, a digital subscriber line (DSL), or a cable modem), or a combination of a wireless channel and a wired connection, where the combination is suitable for accessing the encoded video data stored on the file server. The encoded video data may be transmitted from the storage apparatus 40 through streaming transmission, downloading transmission, or a combination thereof.

The picture decoding method provided in the present disclosure can be applicable to video coding and decoding to support a plurality of multimedia applications, for example, over-the-air television broadcasting, cable television transmission, satellite television transmission, streaming video transmission (for example, through the internet), encoding of video data stored in a data storage media, decoding of video data stored in a data storage media, or another application. In some embodiments, the video coding system may be configured to support unidirectional or bidirectional video transmission, to support applications such as video streaming transmission, video playback, video broadcasting, and/or video telephony.

The video coding system 1 illustrated in FIG. 1 is only an example, and the technologies of the present disclosure can be applicable to video coding settings (for example, video encoding or video decoding) that do not necessarily include any data communication between a coding apparatus and a decoding apparatus. In another embodiment, data is retrieved from a local memory, streamed over a network, or the like. The video coding apparatus may encode data and store the data in a memory, and/or the video decoding apparatus may retrieve data from the memory and decode the data. In some embodiments, coding and decoding are performed by apparatuses that do not communicate with each other, but simply encode data and store the data in a memory and/or retrieve data from the memory and decode the data.

In the example shown in FIG. 1, the coding device 10 includes a video source 120, the video encoder 100 and the output interface 140. In some embodiments, the output interface 140 may include a modulator/demodulator (modem) and/or a transmitter. The video source 120 may include a video capture apparatus (for example, a video camera), a video archive including previously captured video data, a video feed-in interface for receiving video data from a video content provider, and/or a computer graphics system for generating video data, or a combination of some sources of the foregoing video data.

The video encoder 100 may encode video data from the video source 120. In some examples, the coding device 10 directly transmits the encoded video data to the decoding device 20 through the output interface 140. In other examples, the encoded video data may be further stored in the storage apparatus 40, so that the decoding device 20 subsequently accesses the encoded video data for decoding and/or playback.

In the example shown in FIG. 1, the decoding device 20 includes the input interface 240, a video decoder 200, and a display apparatus 220. In some examples, the input interface 240 includes a receiver and/or a modem. The input interface 240 may receive the encoded video data via the link 30 and/or from the storage apparatus 40. The display apparatus 220 may be integrated with the decoding device 20 or may be located outside the decoding device 20. In general, the display apparatus 220 displays decoded video data. The display apparatus 220 may include a plurality of types of display apparatuses, for example, a liquid crystal display (LCD), a plasma display, an organic light-emitting diode (OLED) display, or another type of display apparatus.

Although not shown in FIG. 1, in some aspects, the video encoder 100 and the video decoder 200 may be integrated with an audio encoder and an audio decoder, respectively; and may include an appropriate multiplexer-demultiplexer (MUX-DEMUX) unit or other hardware and software to handle encoding of both audio and video in a common data stream or separate data streams. In some instances, if applicable, the MUX-DEMUX unit may conform to the ITU H.223 multiplexer protocol, or other protocols such as a user datagram protocol (UDP).

The video encoder 100 and the video decoder 200 each may be implemented as any one of a plurality of circuits, for example, one or more microprocessors, digital signal processors (DSP), application-specific integrated circuits (ASIC), field programmable gate arrays (FPGA), discrete logic, hardware, or any combination thereof. If the present disclosure is implemented partially by using software, the apparatus may store an instruction for the software in an appropriate non-volatile computer readable storage medium, and may use one or more processors to execute the instruction in hardware, to implement the technologies in the present disclosure. Any one of the foregoing contents (including hardware, software, a combination of hardware and software, and the like) may be considered as one or more processors. The video encoder 100 and the video decoder 200 each may be included in one or more encoders or decoders. Either the encoder or the decoder may be integrated as a part of a combined encoder/decoder (codec) in a corresponding apparatus.

In the present disclosure, the video encoder 100 may be generally referred to as an apparatus that "signals" or "transmits" some information to another apparatus such as the video decoder 200. The term "signal" or "transmit" may generally refer to transmission of a syntax element and/or other data used to decode compressed video data. The transmission may be performed in real time or almost in real time. Alternatively, the communication may be performed after a period of time, for example, performed when a syntax element in an encoded bitstream is stored in a computer readable storage medium during coding. Then, the decoding apparatus may retrieve the syntax element at any time after the syntax element is stored in the medium.

JCT-VC has developed the H.265 high efficiency video coding (HEVC) standard. HEVC standardization is based on an evolved model of a video decoding apparatus, where the model is referred to as an HEVC test model (HEVC model (HM)). A latest H.265 standard document is available at http://www.itu.int/rec/T-REC-H.265. A latest version of the standard document is H.265 (December 16), and the standard document is incorporated herein by reference in its entirety. In the HM, it is assumed that the video decoding apparatus has several additional capabilities relative to an existing algorithm in ITU-TH.264/AVC. For example, H.264 provides nine intra-frame prediction coding modes, whereas the HM can provide up to 35 intra-frame prediction coding modes.

JVET is committed to developing the H.266 standard. An H.266 standardization process is based on an evolved model of the video decoding apparatus, where the model is referred to as an H.266 test model. H.266 algorithm descriptions are available at http://phenix.int-evry.fr/jvet, and latest algorithm descriptions are included in JVET-F1001-v2. A document of the algorithm descriptions is incorporated herein by reference in its entirety. In addition, reference software for a JEM test model is available at https://jvet.hhi.fraunhofer.de/svn/svn_HMJEMSoftware/, and is also incorporated herein by reference in its entirety.

In general, as described in an HM working model, a video frame or picture may be split into a sequence of tree blocks or largest coding units (LCUs) including both luminance samples and chrominance samples. The LCU is also referred to as a coding tree unit (CTU). A tree block has a function similar to that of a macroblock in the H.264 standard. A slice includes several consecutive tree blocks in a decoding order. The video frame or picture may be partitioned into one or more slices. Each tree block may be split into coding units based on a quadtree. For example, a tree block serving as a root node of the quadtree may be split into four child nodes, and each child node may also serve as a parent node and be split into four other child nodes. A final non-splittable child node serving as a leaf node of the quadtree includes a decoding node, for example, a decoded video block. A maximum quantity of times that the tree block can be split and a minimum size of the decoding node may be defined in syntax data associated with a decoded bitstream.

A size of the CU corresponds to a size of the decoding node, and a shape of the CU must be a square. The size of the CU may range from $8\times8$ pixels to a maximum of $64\times64$ pixels or may be a larger tree block size.

A video sequence usually includes a series of video frames or pictures. For example, a group of pictures (GOPs) includes a series of video pictures, or one or more video pictures. The GOP may include syntax data in header information of the GOP, in header information of one or more of the pictures, or elsewhere, and the syntax data describes a quantity of pictures included in the GOP. Each slice of a picture may include slice syntax data describing a coding mode for the corresponding picture. The video encoder 100 usually performs an operation on a video block in a video slice, to encode the video data. The video block may correspond to the decoding node in the CU. A size of the video block may be fixed or variable, and may vary with a specified decoding standard.

In the present disclosure, "$N\times N$" and "N multiplied by N" is used interchangeably to indicate a pixel size of a video block in a vertical dimension and a horizontal dimension, for example, $16\times16$ pixels or 16 multiplied by 16 pixels. In general, a $16\times16$ block has 16 pixels in a vertical direction (y=16) and 16 pixels in a horizontal direction (x=16). Similarly, an $N\times N$ block has N pixels in a vertical direction and N pixels in a horizontal direction, where N is a non-negative integer value. Pixels in a block may be arranged in rows and columns. In addition, in a block, a quantity of pixels in a horizontal direction and a quantity of pixels in a vertical direction may be not necessarily the same. For example, a block may include $N\times M$ pixels, where M is not necessarily equal to N.

After intra/inter-frame predictive decoding for the CU, the video encoder 100 may calculate residual data for the CU. The CU may include pixel data in a space domain (also referred to as a pixel domain), and the CU may include coefficients in the transform domain after applying a transform (for example, a discrete cosine transform (DCT), an integer transform, a discrete wavelet transform, or a conceptually similar transform) to the residual video data. The residual data may correspond to the pixel difference between the pixels of the uncoded picture with predicted values corresponding to the CU. The video encoder 100 may form a CU including the residual data and generate a transform coefficient for the CU.

After any transformation to produce the transform coefficients, the video encoder 100 may perform quantization on the transform coefficients. The quantization exemplarily refers to the process of quantizing the coefficients to reduce the amount of data used to represent the coefficients, thereby the process of compression is further provided. The process of quantization may reduce the bit depth associated with some or all of the coefficients. For example, n-bit values may be rounded down to m-bit values during quantization, where n is greater than m.

In some embodiments, the video encoder 100 may scan, by using a predefined scan order, the quantized transform coefficients to produce serialized vectors that may be entropy encoded. In other embodiments, the video encoder 100 may perform adaptive scanning. After scanning the quantized transform coefficients to form one-dimensional vectors, the video encoder 100 may perform entropy decoding on the one-dimensional vectors based on context-based adaptive variable-length code (CAVLC), context-based adaptive binary arithmetic coding (CABAC), syntax-based adaptive binary arithmetic coding (SBAC), probability interval partitioning entropy (PIPE) encoding or other entropy encoding methods. The video encoder 100 may also perform entropy encoding on syntax elements associated with the encoded video data, so as to decode the video data by video decoder 200.

In order to perform the CABAC, the video encoder 100 may assign context within the context model to the symbols to be transmitted. The context can be related to whether the adjacent values of symbols are non-zero. To perform the CAVLC, the video encoder 100 may select a variable length code for the symbols to be transmitted. The codewords in the variable-length code (VLC) may be constructed, such that relatively short codes correspond to symbols that are more likely and longer codes correspond to symbols that are less likely. In this manner, the use of VLC can result in code rate savings relative to the use of equal-length codewords for each symbol to be transmitted. The probability in the CABAC can be determined based on the context assigned to the symbols.

In the embodiments of the present disclosure, the video encoder may perform inter-frame prediction to reduce temporal redundancy between pictures. In the embodiments of the present disclosure, the CU currently decoded by the video decoder may be referred to as a current CU. In the embodiments of the present disclosure, the picture currently decoded by the video decoder may be referred to as a current picture.

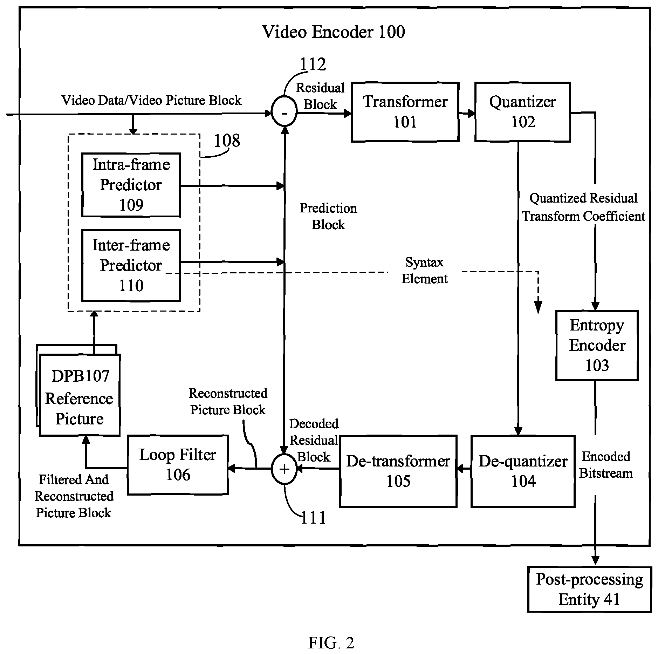

FIG. 2 is a schematic block diagram of a video encoder according to an embodiment of the present disclosure. The video encoder 100 is configured to output a video to a post-processing entity 41. The post-processing entity 41 represents an example of a video entity that may process the encoded video data from the video encoder 100, for example, a media-aware network element (MANE) or a stitching/editing device. In some instances, the post-processing entity 41 may be an example of a network entity. In some video encoding systems, the post-processing entity 41 and the video encoder 100 may be several portions of separate devices, while in other cases, the functionality described with respect to the post-processing entity 41 may be performed by the same device that includes the video encoder 100. In an example, the post-processing entity 41 is an example of the storage device 40 of FIG. 1.

In the example of FIG. 2, the video encoder 100 includes a prediction processing unit 108, a filter unit 106, a decoded picture buffer (DPB) 107, a summator 112, a transformer 101, a quantizer 102, and an entropy encoder 103. The prediction processing unit 108 includes an inter-frame predictor 110 and an intra-frame predictor 109. For picture block reconstruction, the video encoder 100 also includes a de-quantizer 104, a de-transformer 105 and a summator 111. The filter unit 106 is intended to represent one or more loop filters, for example, a de-blocking filter, an adaptive loop filter (ALF) and a sample adaptive offset (SAO) filter. Although the filter unit 106 is shown as an in-loop filter in FIG. 2, in other implementations, the filter unit 106 may be implemented as an after-loop filter. In an example, the video encoder 100 may also include a video data memory, a segmentation unit (not shown in the figures).

The video data memory may store video data to be encoded by components of the video encoder 100. The video data stored in the video data memory may be obtained from the video source 120. The DPB 107 may be a reference picture memory, which stores reference video data for encoding video data by the video encoder 100 in an intra-frame and inter-frame coding mode. The video data memory and the DPB 107 may be formed by any one of a variety of memory devices, for example, synchronous dynamic random access memory (SDRAM), a dynamic random access memory (DRAM), a magnetic random access memory (MRAM), a resistive random access memory (RRAM), or other types of memory devices. The video data memory and the DPB 107 may be provided by the same memory device or separate memory devices. In various examples, the video data storage may be on the device together with other components of the video encoder 100, or external to the device with respect to those components. In various examples, the video data memory may be on the device together with other components of the video encoder 100, or external to the device with respect to those components.

As shown in FIG. 2, the video encoder 100 receives video data and stores the video data in the video data memory. The segmentation unit splits the video data into a number of picture blocks, and these picture blocks may be further split into smaller blocks, for example, picture block splitting based on a quadtree structure or a binary tree structure. This segmentation may also include segmentation into slices, tiles or other larger units. The video encoder 100 generally illustrates components that encode picture blocks within a video slice to be encoded. The slice may be divided into a plurality of picture blocks (and may be divided into collections of picture blocks called slices). The prediction processing unit 108 may select one of a plurality of possible coding modes to be used for the current picture block, for example, one of a plurality of intra-frame coding modes or one of a plurality of inter-frame coding modes. The prediction processing unit 108 may provide the intra-frame coding block and inter-frame coding block to the summator 112 to generate a residual block and to the summator 111 to reconstruct the encoded block for use as a reference picture.

The intra-frame predictor 109 in the prediction processing unit 108 may perform intra-frame predictive encoding of the current picture block with respect to one or more neighboring blocks in the same frame or slice as the current block to be encoded to remove spatial redundancy. The inter-frame predictor 110 in the prediction processing unit 108 may perform inter-frame predictive encoding of the current picture block with respect to one or more predicted blocks in one or more reference pictures to remove temporal redundancy.

Specifically, the inter-frame predictor 110 may be configured to determine an inter-frame prediction mode for encoding the current picture block. For example, the inter-frame predictor 110 may use code rate-distortion analysis to calculate the rate-distortion values of various inter-frame prediction modes in the set of candidate inter-frame prediction modes, and select an inter-frame prediction mode with the best code rate-distortion characteristic. The code rate-distortion analysis typically determines the amount of distortion (or error) between the encoded block and the original un-encoded block that was encoded to produce the encoded block, and produce the bit-code rate (that is, the number of bits) used to produce the encoded block. For example, the inter-frame predictor 110 may determine that the inter-frame prediction mode in the set of candidate inter-frame prediction modes that encodes the current picture block with the least costly code rate distortion is the inter-frame prediction mode used to perform the inter-frame prediction of the current picture block.

The inter-frame predictor 110 is used to predict motion information (for example, motion vectors) of one or more sub-blocks in the current picture block based on the determined inter-frame prediction mode, and obtain or generate a prediction block of the current picture block by using the motion information (for example, the motion vectors) of one or more sub-blocks in the current picture block. The inter-frame predictor 110 may locate a prediction block pointed to by the motion vectors in one of the lists of reference pictures. The inter-frame predictor 110 may also generate syntax elements associated with picture blocks and video slices for use by the video decoder 200 when decoding picture blocks of video slices. Alternatively, in an example, the inter-frame predictor 110 performs a motion compensation process by using the motion information of each sub-block to generate a prediction block for each sub-block to obtain a prediction block for the current picture block. It will be understood that the inter-frame predictor 110 herein performs the motion estimation and motion compensation processes.

Specifically, after selecting an inter-frame prediction mode for the current picture block, the inter-frame predictor 110 may provide information indicating the selected inter-frame prediction mode of the current picture block to the entropy encoder 103, so that the entropy encoder 103 can encode the information indicating the selected inter-frame prediction mode.

The intra-frame predictor 109 may perform intra-frame prediction for the current picture block. Explicitly, the intra-frame predictor 109 may determine the intra-frame prediction mode used to encode the current block. for example, the intra-frame predictor 109 may use a bit rate-distortion analysis to calculate bit rate-distortion values for various intra-frame prediction modes to be tested, and select the intra-frame prediction mode with the best bit rate-distortion characteristic from among the modes to be tested. In any case, after selecting an intra-frame prediction mode for a picture block, the intra-frame predictor 109 may provide information indicative of the selected intra-frame prediction mode for the current picture block to the entropy encoder 103, so that the entropy encoder 103 encodes the information indicative of the selected intra-frame prediction mode.

After the prediction processing unit 108 generates a prediction block of the current picture block by inter-frame prediction, intra-frame prediction, the video encoder 100 forms a residual picture block by subtracting the prediction block from the current picture block to be encoded. The summator 112 represents one or more components that perform the subtraction operation. The residual video data in the residual block may be included in one or more transform units (TUs) and applied to the transformer 101. The transformer 101 transforms residual video data into residual transform coefficients by using a transform such as discrete cosine transform (DCT) or a conceptually similar transform. The transformer 101 can transform the residual video data from the pixel value domain to the transform domain, for example, a frequency domain.

The transformer 101 may send the resulting transform coefficients to the quantizer 102. The quantizer 102 quantizes the transform coefficients to further reduce the bit code rate. In some examples, the quantizer 102 may then perform a scan of a matrix including the quantized transform coefficients. Alternatively, the entropy encoder 103 may perform scanning.

After the quantization, the entropy encoder 103 entropy encodes the quantized transform coefficients. For example, the entropy encoder 103 may perform context adaptive variable length coding (CAVLC), context adaptive binary arithmetic coding (CABAC), syntax-based adaptive binary arithmetic coding (SBAC), probability interval partitioning entropy (PIPE) coding, or another entropy coding method or technique. After entropy encoding by the entropy encoder 103, the encoded code stream may be transmitted to the video decoder 200, or archived for later transmission or retrieved by the video decoder 200. The entropy encoder 103 may also entropy encode syntax elements of the current picture block to be encoded.

The de-quantizer 104 and the de-transformer 105 apply dequantization and de-transformation, respectively, to reconstruct the residual block in the pixel domain, for example, a reference block for later use as a reference picture. The summator 111 adds the reconstructed residual block to the prediction block generated by inter-frame predictor 110 or intra-frame predictor 109 to produce the reconstructed picture block. The filter unit 106 may be adapted to the reconstructed picture block to reduce distortions, for example, block artifacts. The reconstructed picture block is stored as a reference block in the decoded picture buffer 107, and the reconstructed picture block may be used as a reference block by the inter-frame predictor 110 to perform inter-frame prediction of blocks in subsequent video frames or pictures.

It should be understood that other structural variations of the video encoder 100 may be used to encode a video stream. For example, for some picture blocks or frames, the video encoder 100 may quantize the residual signals directly without being processed by the transformer 101, and accordingly, without being processed by the de-transformer 105; or, for some picture blocks or frames, the video encoder 100 does not generate residual data, and accordingly, does not need to process the residual signals by the transformer 101, the quantizer 102, the de-quantizer 104, and the de-transformer 105; or, the video encoder 100 may store the reconstructed picture block as a reference block directly without processing by the filter unit 106; or, the quantizer 102 and the de-quantizer 104 in the video encoder 100 may be combined together.

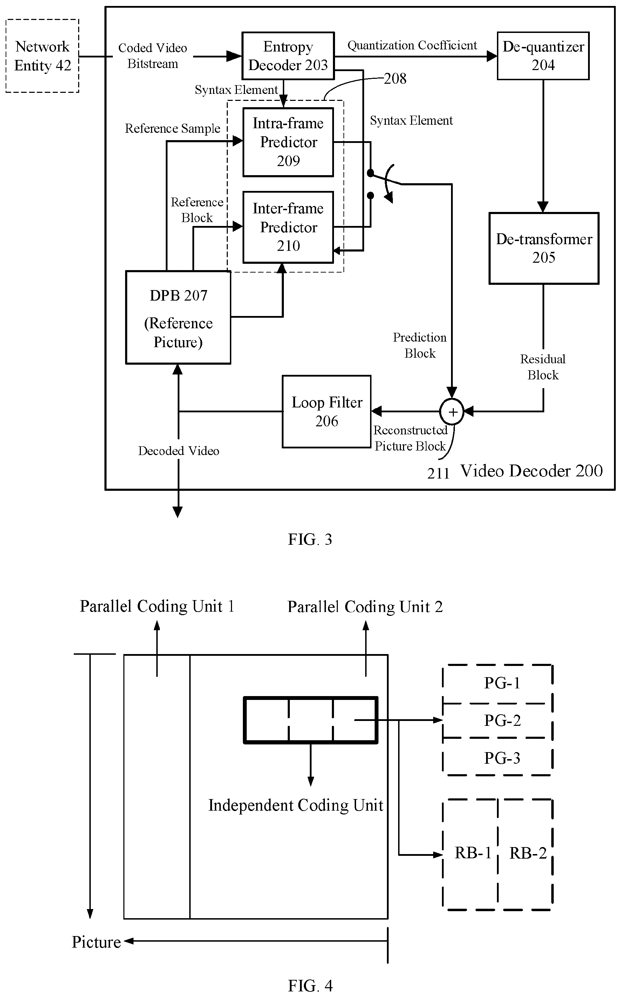

FIG. 3 is a schematic block diagram of a video decoder 200 according to an embodiment of the present disclosure. In the example of FIG. 3, the video decoder 200 includes an entropy decoder 203, a prediction processing unit 208, a de-quantizer 204, a de-transformer 205, a summator 211, a filter unit 206, and a decoded picture buffer (DPB) 207. The prediction processing unit 208 includes an inter-frame predictor 210 and an intra-frame predictor 209. In some examples, the video decoder 200 may perform a decoding process that is largely reversible with respect to the encoding process described with respect to the video encoder 100 in FIG. 2.

In the decoding process, the video decoder 200 receives from the video encoder 100 an encoded video code stream representing picture blocks of the encoded video slice and associated syntax elements. The video decoder 200 may receive video data from the network entity 42, and optionally, may store the video data in a video data memory (not shown in the figures). The video data memory may the store video data to be decoded (for example, an encoded video code stream) by components of the video decoder 200. The video data stored in the video data memory may be obtained, for example, from the storage device 40, from a local video source such as a camera, via wired or wireless network communication of the video data, or by accessing physical data storage medium. The video data memory may serve as a decoded picture buffer for storing the encoded video data from the encoded video stream. Therefore, although the video data memory is not shown in FIG. 3, the video data memory and the DPB 207 may be the same memory or separately memories. The video data memory and the DPB 207 may be formed by any one of a variety of memory devices, for example, a dynamic random access memory (DRAM) including a synchronous dynamic random access memory (SDRAM), a magnetic random access memory (MRAM), a resistive random access memory (RRAM), or other types of memory devices. In various examples, the video data memory may be on the device together with other components of the video decoder 200, or external to the device with respect to those components.

The network entity 42 may be a server, a media-aware network element (MANE), a video editor/cutter, or other device for implementing one or more of the techniques described above. The network entity 42 may or may not include a video encoder, for example, the video encoder 100. Before the network entity 42 sends the encoded video stream to the video decoder 200, the network entity 42 may implement a portion of the techniques described in the present disclosure. In some video decoding systems, the network entity 42 and the video decoder 200 may be a portion of a separate device, while in other cases, functionality described with respect to network entity 42 may be performed by the same device that includes the video decoder 200. In some embodiments, the network entity 42 may be an example of the storage device 40 of FIG. 1.

The entropy decoder 203 of the video decoder 200 entropy decodes the code stream to produce quantized coefficients and some syntax elements. The entropy decoder 203 forwards the syntax elements to the prediction processing unit 208. The video decoder 200 may receive syntax elements at the video slice level and/or at the picture block level.

When the video slice is decoded as an intra-frame decoded (I) slice, the intra-frame predictor 209 of the prediction processing unit 208 may generate a prediction block for the picture block of the current video slice based on the intra-frame prediction mode notified by the signaling and data from a previously decoded block of the current frame or picture. When the video slice is decoded as an inter-frame decoded (that is, B or P) slice, the inter-frame predictor 210 of the prediction processing unit 208 may determine, based on syntax elements received from the entropy decoder 203, an inter-frame prediction mode for decoding a current picture block of the current video slice, and decode (for example, perform an inter-frame prediction) the current picture block based on the determined inter-frame prediction mode. Specifically, the inter-frame predictor 210 may determine whether to predict the current picture block of the current video slice by using a new inter-frame prediction mode, and if the syntax elements indicate that a new inter-frame prediction mode is to be used to predict the current picture block, the current picture block of the current video slice is predicted based on the new inter-frame prediction mode (for example, one of the new inter-frame prediction modes specified by the syntax elements or one of the default new inter-frame prediction modes) of the current picture block or a sub-block of the current picture block, thereby the predicted motion information of the current picture block or the sub-block of the current picture block is used to obtain or generate a predicted block of the current picture block or the sub-block of the current picture block through a motion compensation process. The motion information herein may include reference picture information and a motion vector, where the reference picture information may include, but is not limited to, unidirectional/bidirectional prediction information, a list number of reference pictures and a reference picture index corresponding to the list of reference pictures. For the inter-frame prediction, a prediction block may be generated from any one of the reference pictures within one of the lists of reference pictures. The video decoder 200 may construct the list of reference pictures based on the reference pictures stored in the DPB 207, that is, list 0 and list 1. A reference frame index of the current picture may be included in one or more of the lists 0 and 1 of reference frames. In some examples, the video encoder 100 signals a notification indicating whether a new inter-frame prediction mode is used to decode a particular syntax element of a particular block.

Alternatively, the video encoder 100 signals a notification indicating whether a new inter-frame prediction mode is used, as well as an indication of exactly which new inter-frame prediction mode is used to decode a particular syntax element of a particular block. It will be understood that the inter-frame predictor 210 herein performs a motion compensation process.

The de-quantizer 204 inverts quantization on, that is de-quantizes, the quantized transform coefficients provided in the code stream and decoded by the entropy decoder 203. The process of inverse quantization (dequantization) may include: determining a degree of quantization to be applied by using quantization parameters calculated by the video encoder 100 for each picture block in the video slice and similarly determining a degree of inverse quantization to be applied. The de-transformer 205 applies an inverse transform to the transform coefficients, for example, an inverse DCT, an inverse integer transform, or a conceptually similar inverse transform process, so as to produce a residual block in the pixel domain.

After the inter-frame predictor 210 generates a prediction block for the current picture block or a sub-block of the current picture block, the video decoder 200 obtains the reconstructed block, that is, the decoded picture block, by summing the residual block from the de-transformer 205 with the corresponding prediction block generated by the inter-frame predictor 210. The summator 211 represents the component that performs this summation operation. A loop filter (in the decoding loop or after the decoding loop) may also be used to smooth pixel transform or otherwise improve video quality when desired. The filter unit 206 may represent one or more loop filters, for example, a deblocking filter, an adaptive loop filter (ALF), and a sample adaptive offset (SAO) filter. Although the filter unit 206 is shown as an in-loop filter in FIG. 3, in other implementations, the filter unit 206 may be implemented as an after-loop filter. In an example, the filter unit 206 is adapted to reconstruct the block to minimize block distortion, and the result is output as a decoded video stream. Also, the decoded picture block in a given frame or picture may be stored in the DPB 207, and the reference picture for subsequent motion compensation may be stored via the DPB 207. The DPB 207 may be a part of a memory, which may also store the decoded video for later presentation on a display device (for example, the display device 220 of FIG. 1), or may be separate from such a memory.

It should be understood that other structural variations of the video decoder 200 may be used to decode the encoded video stream. For example, the video decoder 200 may generate an output video stream without processing by the filter unit 206. Alternatively, for certain picture blocks or picture frames, the entropy decoder 203 of the video decoder 200 does not decode the quantized coefficients, and accordingly does not need to be processed by the de-quantizer 204 and the de-transformer 205.

The techniques of the present disclosure may be performed by either of a video encoder or a video decoder described herein, for example, the video encoder 100 and the video decoder 200 described and shown in FIG. 1 to FIG. 3. That is, in an embodiment, the video encoder 100 shown in FIG. 2 may perform the particular techniques described hereinafter when performing the inter-frame prediction during encoding of blocks of video data. In another embodiment, the video decoder 200 shown in FIG. 3 may perform the particular techniques described hereinafter when performing the inter-frame prediction during decoding of blocks of video data. Therefore, references to a general "video encoder" or "video decoder" may include the video encoder 100, the video decoder 200, or another video encoding or decoding unit.

FIG. 1 to FIG. 3 are only examples provided by the present disclosure, and in some examples, the video encoder 100, the video decoder 200, and the video coding system may include more or fewer components or units, without limitation of the present disclosure.

Based on the video coding system illustrated in FIG. 1 to FIG. 3, the present disclosure provides a possible video encoding/decoding realization. As shown in FIG. 4, FIG. 4 is a schematic flowchart of a video coding/decoding process according to an embodiment of the present disclosure. The video coding/decoding realization includes processes ① to ⑤, and the processes ① to ⑤ may be performed by one or more of the coding device 10, the video decoder 100, the decoding device 20 or the video decoder 200.

In the process ①, a picture frame is divided into one or more parallel coding units that do not overlap each other. The one or more parallel coding units have no dependency on each other and can be encoded and decoded completely in parallel or independently, for example, a parallel coding unit 1 and a parallel coding unit 2 shown in FIG. 4.

In the process ②, for each of the parallel coding units, the parallel coding unit can be divided into one or more independent coding units that do not overlap with each other, and each of the independent coding units can be independent of each other, but can share some parallel coding unit header information.

For example, the independent coding unit has a width of w_lcu and a height of h_lcu. If the parallel coding unit is divided into an independent coding unit, a size of the independent coding unit is identical to that of the parallel coding unit; otherwise, the width of the independent coding unit will be greater than the height thereof (unless it is an edge region).

Typically, the independent coding unit may be a fixed w_lcu×h_lcu, with both w_lcu and h_lcu being the Nth power of 2 (N≥0), for example, an independent coding unit with a size of 128×4, 64×4, 32×4, 16×4, 8×4, 32×2, 16×2, or 8×2, and the like.

As a possible example, the independent coding unit may be a fixed 128×4. If the size of the parallel coding unit is 256×8, the parallel coding unit may be equally divided into 4 independent coding units. If the size of the parallel coding unit is 288×10, the parallel coding unit is divided into: a first/second row of two independent coding units of 128×4 an one independent coding unit of 32×4, and a third row of two independent coding units of 128×2 and one independent coding unit of 32×2.

It is to be noted that the independent coding unit can include three components: a luminance Y, a chrominance Cb, and a chrominance Cr, or three components: a red (R), a green (G), and a blue (B), or only one of these components. If the independent coding unit includes three components, the sizes of the three components may be exactly the same or different, depending on the input format of the picture.

In the process ③, for each of the independent coding units, the independent coding unit can be divided into one or more coding units that do not overlap each other, and each of the coding units in the independent coding unit can be dependent on each other, for example, multiple coding units can be cross-referenced to pre-encoding and pre-decoding.

If the coding unit has the same size as the independent coding unit (that is, the independent coding unit is divided into only one coding unit), the size of the coding unit may be all the sizes described in process ②.

If the independent coding unit is divided into a plurality of coding units that do not overlap each other, examples of feasible divisions may be: horizontal equal division (the height of the coding unit is the same as that of the independent coding unit but the widths are different, for example, the width of the coding unit may be 1/2, 1/4, 1/8, 1/16, or the like of the width of the independent coding unit), vertical equal division (the width of the coding unit is the same as that of the independent coding unit and the heights are different, for example, the height of the coding unit may be 1/2, 1/4, 1/8, 1/16, or the like of the height of the independent coding unit), horizontal and vertical equal division (quadtree division), preferably the horizontal equal division.

A coding unit has a width of w_cu and a height of h_cu, and the width is greater than the height (otherwise, it is an edge region). Typically, the coding unit can be a fixed w_cu×h_cu, with both w_cu and h_cu the Nth power of 2 (N≥0), for example, 16×4, 8×4, 16×2, 8×2, 8×1, 4×1, and the like.

For example, the coding unit may be a fixed 16×4. If the size of the independent coding unit is 64×4, the independent coding unit may be equally divided into four coding units. If the size of the independent coding unit is 72×4, the independent coding unit is divided as follows: four coding units of 16×4 and one coding unit of 8×4.

It is to be noted that the coding unit can include three components: a luminance Y, a chrominance Cb, and a chrominance Cr, (or a red (R), a green (G), and a blue (B)), or only one of these components. If three components are included, the sizes of these components can be exactly the same or different, depending on the input format of the picture.

It is to be noted that the process ③ is an optional step in the video encoding/decoding method, and the video encoder/decoder may encode/decode the residual coefficients (or residual values) of the independent coding units obtained in the process ②.

In the process ④, for the coding unit, it can be divided into one or more prediction groups (PGs) that do not overlap each other, a PG can be abbreviated as a group. Each of the PGs is encoded/decoded in accordance with a selected prediction mode to obtain the prediction value of the PG, such that the prediction values of all the PGs constitute a prediction value of the coding unit. Based on the prediction value and the original value of the coding unit, the residual value of the coding unit is obtained.

In the process ⑤, based on the residual value of the coding unit, the coding unit is grouped to obtain one or more residual blocks (RBs) that do not overlap each other. The residual coefficients of the RBs are encoded and decoded according to the selected mode to form the residual coefficient stream. Specifically, the residual coefficients may be transformed or not transformed.

The selected mode for the encoding and decoding method for the residual coefficient in the process ⑤ may include, but is not limited to, any one of the following: a semi-fixed-length coding mode, an exponential Golomb encoding method, a Golomb-Rice encoding method, a truncated unary code encoding method, a run-length encoding method, a direct encoding of the original residual values, and the like.

For example, a video encoder can directly encode the coefficients in the RBs.

For example, the video encoder may transform the residual block, for example, DCT, DST, Hadamard transform, and the like, and then encode the transformed coefficients.

As a possible example, when the RB is relatively small, the video encoder may directly uniquely quantize the coefficients in the RBs, and then perform binary encoding. If the RB is relatively large, the RB may be further divided into a plurality of coefficient groups (CG), the CGs are uniformly quantized, and the binary encoding is performed. In some embodiments of the present disclosure, the coefficient group (CG) and the quantization group (QG) may be the same.

The following is an exemplary illustration of the encoding for the residual coefficient in a semi-fixed-length encoding mode. The maximum value of the absolute value of the residual in an RB is defined as a modified maximum (mm). The number of encoding bits of the residual coefficient in the RB is determined, where the number of encoding bits of the residual coefficient in the same RB block is consistent. For example, if a critical limit (CL) of the current RB is 2, and the current residual coefficient is 1, two bits are needed to encode the residual coefficient 1, denoted 01. If the CL of the current RB is 7, it indicates as a residual coefficient with an encoding 8-bit and a sign bit with a 1-bit. The CL is determined by going for the smallest M value that satisfies that all residual values of the current sub-blocks are within $[-2^{(M-1)}, 2^{(M-1)}]$. If two boundary values $-2^{(M-1)}$ and $2^{(M-1)}$ exist, M will be increased by 1, that is, M+1 bits are required to encode all the residual values of the current RB. If only one of the two boundary values -2^(M-1) and 2^(M-1) exists, a Trailing bit is required to encode to determine whether the boundary value is -2^(M-1) or 2^(M-1). If none of the residual values have either of -2^(M-1) and 2^(M-1), there is no need to encode this Trailing bit.

In addition, for some special cases, the video encoder may directly encode the original values of the picture instead of the residual values.

It should be noted that the coding block (CB) in the embodiments of the present disclosure corresponds to a picture block in the picture. The coding block may be a coding unit divided by the above process ③, or a prediction group obtained by dividing the coding unit.

Hereinafter, the picture decoding method and the picture coding method involved in the embodiments of the present disclosure will be described in detail by combining the framework diagrams of the video coding system shown in FIG. 1, the video encoder shown in FIG. 2 and the video decoder shown in FIG. 3.

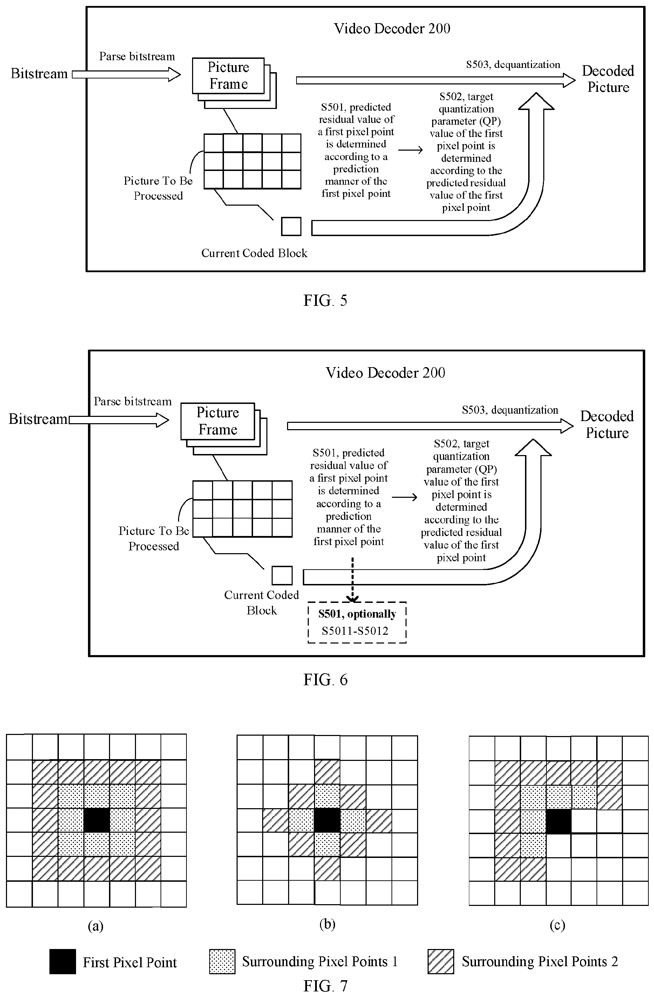

FIG. 5 is a schematic flowchart of a picture decoding method according to an embodiment of the present disclosure. The picture decoding method can be applied to the video coding system shown in FIG. 1, and can be performed by the decoding device 20. Specifically, the picture decoding method can be performed by the video decoder 200 included in the decoding device 20. As shown in FIG. 5, the picture decoding method according to the embodiment of the present disclosure includes the following steps.

S501, a predicted residual value of a first pixel point is determined according to a prediction manner of the first pixel point.

The first pixel point is a pixel point currently processed by a video decoder, and the first pixel point is any pixel point in a current coding block. The current coding block is a decoding block currently processed by the video decoder. It should be understood that for each pixel point in the current coding block, the solutions provided in the present disclosure can be used for decoding or coding. The embodiments of the present disclosure only take the coding and decoding process of the first pixel point as an example to describe, and is not specifically limited.

It can be understood that one or more picture frames included in a video stream can be obtained by decoding the video stream to be decoded. Each of the one or more picture frames includes one or more picture blocks. In the embodiment of the present disclosure, the current coding block corresponds to a picture block of a picture to be processed (the picture to be processed is any one of one or more picture frames), and the coding block can be a coding unit (CU).

In some embodiments, the predicted residual value is configured to reflect a gradient of the first pixel point. A gradient of a pixel point is configured to represent a difference between the pixel point with pixel points surrounding the pixel point, and may reflect the complexity of the pixel point (for example, texture characteristics). For example, if a gradient value of a pixel point is larger, it indicates that the difference between the pixel point with pixel points surrounding the pixel point is relatively large (reflected in the picture, indicating that texture information of the current coding block is relatively more), thereby indicating that the complexity of the pixel point is relatively high; and if the gradient value of the pixel point is smaller, it indicates that the difference between the pixel point with pixel points surrounding the pixel point is relatively small (reflected in the picture, indicating that the current coding block is relatively smooth), thereby indicating that the complexity of the pixel point is relatively low.

In some embodiments, the predicted residual value of the first pixel point is determined by a gradient of one or more reconstructed pixel points surrounding the first pixel point; or the predicted residual value of the first pixel point is determined by a residual value obtained by performing dequantization on the one or more reconstructed pixel points surrounding the first pixel point. It can be understood that since the first pixel point has not been reconstructed yet, it is not possible to directly calculate the gradient of the first pixel point according to a pixel value of the first pixel point. Since gradient information of adjacent pixel points is relatively close, the gradient of the pixel point can be reconstructed according to the gradient of the one or more reconstructed pixel points surrounding the first pixel point or the residual value obtained by performing dequantization on the one or more reconstructed pixel points surrounding the first pixel point (the residual value obtained by performing dequantization on the pixel point can reflect the gradient of the pixel point), that is, the predicted residual value of the first pixel point can be determined.

For example, the predicted residual value of the first pixel point includes a target value or an average value of target values, where the target value is a gradient of one or more reconstructed pixel points surrounding the first pixel point, or the target value is an absolute value of the gradient of the one or more reconstructed pixel points surrounding the first pixel point, or the target value is a residual value of the one or more reconstructed pixel points surrounding the first pixel point after performing dequantization, or the target value is an absolute value of the residual value of the one or more reconstructed pixel points surrounding the first pixel point after performing dequantization.

Optionally, as shown in FIG. 6, the above step S501 can be specifically realized as the following steps S5011 and S5012.

S5011, information of one or more reference pixel points of the first pixel point is obtained.

The one or more reference pixel points refer to one or more reconstructed pixel points surrounding the first pixel point referenced when performing pixel-wise prediction on the first pixel point.

As a possible implementation, the above step S5011 can be realized as the following steps.

Step 1, information of one or more reconstructed pixel points surrounding the first pixel point is obtained.

The one or more reconstructed pixel points surrounding the first pixel point can be understood as one or more reconstructed pixel points adjacent to the first pixel point. In the embodiments of the present disclosure, the one or more reconstructed pixel points surrounding the first pixel point include pixel points that satisfy the following conditions: pixel points in a square area with the first pixel point as a center and a first preset value as a side length; or pixel points in a diamond-shaped area with the first pixel point as the center and a second preset value as a diagonal length; or pixel points in a L-shaped area with the first pixel point as a vertex, a third preset value as a horizontal length and a fourth preset value as a vertical length.

Optionally, the first preset value, the second preset value, the third preset value and the fourth preset value can be set according to actual needs, and the first preset value, the second preset value, the third preset value and the fourth preset value can be the same or different. For example, the first preset value, the second preset value, the third preset value and the fourth preset value can be one of 3 or 5.

For example, (a) in FIG. 7 shows a schematic diagram of dividing a square area with a first pixel point as a center. Two possible cases are given here. Case 1: reconstructed pixel points refer to pixel points in the square area with a side length of 3 centered on a first pixel point, for example, surrounding pixel points 1 shown in (a) of FIG. 7. Case 2: the reconstructed pixel points refer to pixel points in the square area with the side length of 5 centered on the first pixel point, for example, surrounding pixel points 2 shown in (a) of FIG. 7.

(B) in FIG. 7 shows a schematic diagram of dividing a diamond-shaped area with a first pixel point as a center. Two possible cases are given here. Case 1: reconstructed pixel points refer to pixel points in the diamond-shaped area with a diagonal length of 3 centered on the first pixel point, for example, surrounding pixel points 1 shown in (b) of FIG. 7. Case 2: the reconstructed pixel points refer to pixel points in the diamond-shaped area with the diagonal length of 5 centered on the first pixel point, for example, surrounding pixel points 2 shown in (b) of FIG. 7.

(C) in FIG. 7 shows a schematic diagram of dividing a semi-enclosed area with a third preset value as a horizontal length and a fourth preset value as a vertical length. Two possible cases are given here. Case 1: reconstructed pixel points refer to pixel points in the semi-enclosed area with the horizontal length of 3 on an upper side of the first pixel point and the vertical length of 3 on a left side of the first pixel point, for example, surrounding pixel points 1 shown in (c) of FIG. 7. Case 2: the reconstructed pixel points refer to pixel points in the semi-enclosed area with the horizontal length of 5 on the upper side of the first pixel point and the vertical length of 3 on the left side of the first pixel point, for example, surrounding pixel points 2 shown in (c) of FIG. 7.

It should be noted that FIG. 7 is only an example of the embodiments of the present disclosure to illustrate reconstructed pixel points surrounding a current pixel point, and should not be understood as a limitation of the present disclosure. In other possible examples, the reconstructed pixel points surrounding the current pixel point can also refer to one or two pixel points adjacent to the current pixel point up and down or left and right.

Optionally, the information of the one or more reconstructed pixel points surrounding the first pixel point includes at least one of the following information: one or more pixel values of the one or more reconstructed pixel points, one or more reconstructed residual values of the one or more reconstructed pixel points (the reconstructed residual values include residual values after performing dequantization or a difference between a reconstructed value and a predicted value), one or more gradient values (including horizontal gradient, vertical gradient or average gradient) of the one or more reconstructed pixel points, flatness information, texture information, complexity information, background brightness, contrast, or a degree of motion (the degree of motion can be represented by motion vectors).

Further, optionally, a value of the information of the one or more reconstructed pixel points includes at least one of the following: an original value, an absolute value, a mean value or a difference value.

Step 2, information of one or more reference pixel points of the first pixel point is determined according to a prediction manner of the first pixel point and the information of one or more reconstructed pixel points surrounding the first pixel point.

In some embodiments, the prediction manner is configured to indicate a position of one or more reconstructed pixel points referenced when performing prediction on a pixel point.

Optionally, the prediction manner includes: performing prediction according to reconstructed pixel points on a left side and a right side of the pixel point; and/or performing prediction according to reconstructed pixel points on an upper side and a lower side of the pixel point; and/or performing prediction according to one or more reconstructed pixel points on the left side of the pixel point; and/or performing prediction according to one or more reconstructed pixel points on an upper side of the pixel point.

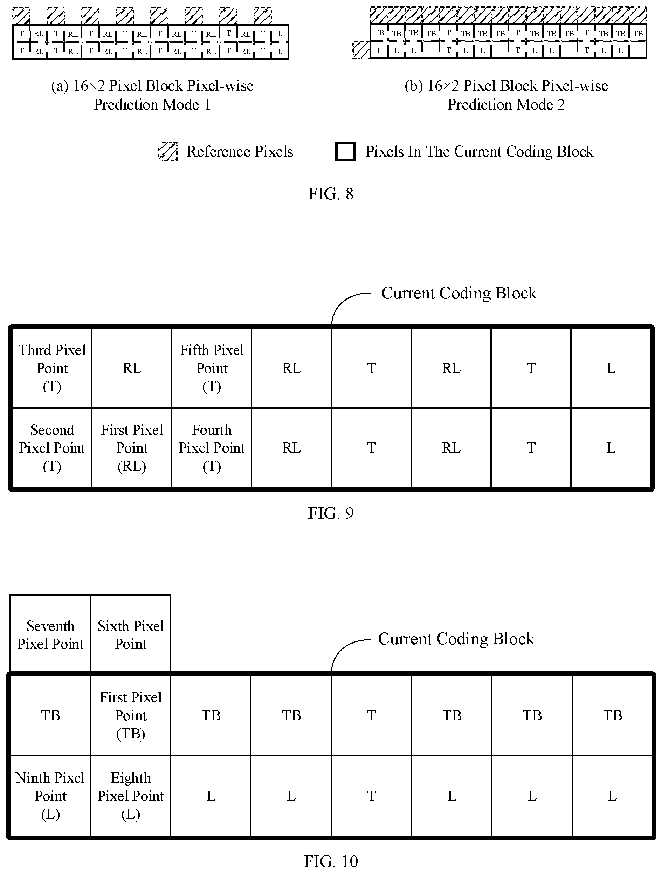

As an example, as shown in FIG. 8, taking a coding block with a current coding block of 16×2 (a width w is 16 and a height h is 2) as an example, a prediction mode of the coding block is a pixel-wise prediction mode. The pixel-wise prediction mode of the coding block includes two modes, namely mode 1 and mode 2. As shown in (a) of FIG. 8, the mode 1 is a vertical prediction mode configured to process vertical textures; and as shown in (b) of FIG. 8, the mode 2 is a horizontal prediction mode configured to process horizontal textures.

RL represents that a predicted value of a current pixel point is an average value of reconstructed values of pixel points on a left side and a right side of the current pixel point.

TB represents that the predicted value of the current pixel point is an average value of reconstructed values of pixel points on an upper side and a lower side of the current pixel point.

L represents that the predicted value of the current pixel point is one or more reconstructed values of one or more pixel points on the left side of the current pixel point.

T represents that the predicted value of the current pixel point is one or more reconstructed values of one or more pixel points on the upper side of the current pixel point.

In some embodiments, for the convenience of description, pixel points predicted according to reconstructed pixel points on a left side and a right side of the pixel points are referred as a first type of pixel points, pixel points predicted according to reconstructed pixel points on an upper side and a lower side of the pixel points are referred as a second type of pixel points, pixel points predicted according to reconstructed pixel points on the left side of the pixel points are referred as a third type of pixel points, and pixel points predicted according to reconstructed pixel points on the upper side of the pixel points are referred as a fourth type of pixel points.

In some embodiments, firstly, one or more reference pixel points of the first pixel point are selected from one or more reconstructed pixel points surrounding the first pixel point according to the prediction manner of the first pixel point; and then information of the one or more reference pixel points of the first pixel point is determined according to information of the one or more reconstructed pixel points surrounding the first pixel point.

Optionally, selecting one or more reference pixel points of the first pixel point from one or more reconstructed pixel points surrounding the first pixel point according to the prediction manner of the first pixel point includes the following cases.

Case 1: in the case that the prediction manner of the first pixel point is to perform prediction according to the reconstructed pixel points on the left side and the right side of the pixel point, the reference pixel points of the first pixel point are one or more reconstructed pixel points on the left side of the first pixel point and one or more reconstructed pixel points on the right side of the first pixel point.

Case 2: in the case that the prediction manner of the first pixel point is to perform prediction according to the reconstructed pixel points on the upper side and the lower side of the pixel point, the reference pixel points of the first pixel point are one or more reconstructed pixel points on the upper side of the first pixel point and one or more reconstructed pixel points on the lower side of the first pixel point.

Case 3: in the case that the prediction manner of the first pixel point is to perform prediction according to one or more reconstructed pixel points on the left side of the pixel point, the reference pixel points of the first pixel point are one or more reconstructed pixel points on the left side of the first pixel point.

Case 4: in the case that the prediction manner of the first pixel point is to perform prediction according to one or more reconstructed pixel points on the upper side of the pixel point, the reference pixel points of the first pixel point are one or more reconstructed pixel points on the upper side of the first pixel point.

Optionally, determining the information of one or more reference pixel points of the first pixel point according to the information of one or more reconstructed pixel points surrounding the first pixel point includes the following two cases.

Case 1: if one or more reference pixel points are the one or more reconstructed pixel points in the current coding block, the information of the one or more reference pixel points is taken as the information of the one or more reconstructed pixel points surrounding the first pixel point.

Case 2: if one or more reference pixel points are one or more reconstructed pixel points outside the current coding block, differences between the information of the one or more reference pixel points with the information of one or more reconstructed pixel points surrounding the one or more reference pixel points or absolute values of the differences are taken as the information of the one or more reconstructed pixel points surrounding the first pixel point.

It can be understood that the one or more reference pixel points of the first pixel point are the one or more reconstructed pixel points, which may or may be one or more reconstructed pixel points in the current coding block, or may not be one or more reconstructed pixel points in the current coding block, that is, one or more reconstructed pixel points outside the current coding block. For example, when the prediction mode is the intra-frame prediction mode, the one or more reconstructed pixel points are one or more pixel points surrounding the coding block in the current picture frame; and when the prediction mode is the inter-frame prediction mode, the one or more reconstructed pixel points can be one or more reconstructed blocks on a reference frame of the current picture frame.

As another possible implementation, the above step S5011 can be realized as the following steps.

Step a1, one or more reference pixel points of the first pixel point are determined according to a prediction manner of the first pixel point.

As an example, in the case that the prediction manner of the first pixel point is to perform prediction according to the reconstructed pixel points on the left side and the right side of the pixel point, one or more reconstructed pixel points on the left side of the first pixel point and one or more reconstructed pixel points on the right side of the first pixel point are taken as the reference pixel points of the first pixel point; in the case that the prediction manner of the first pixel point is to perform prediction according to the reconstructed pixel points on the upper side and the lower side of the pixel point, one or more reconstructed pixel points on the upper side of the first pixel point and one or more reconstructed pixel points on the lower side of the first pixel point are taken as the reference pixel points of the first pixel point; in the case that the prediction manner of the first pixel point is to perform prediction according to one or more reconstructed pixel points on the left side of the pixel point, one or more reconstructed pixel points on the left side of the first pixel point are taken as the reference pixel points of the first pixel point; and in the case that the prediction manner of the first pixel point is to perform prediction according to one or more reconstructed pixel points on the upper side of the pixel point, one or more reconstructed pixel points on the upper side of the first pixel point are taken as the reference pixel points of the first pixel point.

Step a2, information of the one or more reference pixel points of the first pixel point are obtained.

As an example, the information of the one or more reference pixel points of the first pixel point includes one or more of the following: pixel values, flatness information, texture information, complexity information, background brightness, contrast, a degree of motion (the degree of motion can be represented by motion vectors), or the like.

Further, optionally, a value of the information of the one or more reference pixel points includes at least one of the following: an original value, an absolute value, a mean value or a difference value.

S5012, a predicted residual value of the first pixel point is determined according to information of one or more reference pixel points of the first pixel point.

In some embodiments, in the case that the prediction manner of the first pixel point is to perform prediction according to the reconstructed pixel points on the left side and the right side of the pixel point, the reference pixel points of the first pixel point are one or more reconstructed pixel points on the left side of the first pixel point and one or more reconstructed pixel points on the right side of the first pixel point, there are two manners to determine the predicted residual value of the first pixel point.

Manner 1: the predicted residual value of the first pixel point is determined according to a difference between the reconstructed values of the reference pixel points of the first pixel point with a predicted value. The above step S5012 can be realized as the following steps.

Step b1-1, a difference between a pixel value of a second pixel point and a pixel value of a third pixel point is calculated as a first difference value.

The second pixel point is a first reconstructed pixel point on a left side of the first pixel point, and the third pixel point is a first reconstructed pixel point on an upper side of the second pixel point.

For example, assuming that coordinates of the first pixel point in a target channel are (pic_x, pic_y), coordinates of the second pixel point in the target channel are (pic_x-1, pic_y), and coordinates of the third pixel point in the target channel are (pic_x-1, pic_y-1), then the first difference value can satisfy: I[pic_y][pic_x-1]-I[pic_y-1][pic_x-1], where I[pic_y][pic_x-1] represents a pixel value of the pixel point (pic_x-1, pic_y) in the target channel, and I[pic_y-1][pic_x-1] represents a pixel value of the pixel point (pic_x-1, pic_y-1) in the target channel.

It should be noted that for a single pixel point, I represents a pixel value of the pixel point (for a reconstructed pixel point, I represents a reconstructed pixel value of the pixel point); and for a current coding block, I represents a pixel value matrix of reconstructed pixel points included in the current coding block.

In some embodiments, the target channel represents a channel where the current coding block is located. The channel where the current coding block is located can be any one of a luminance channel and a chrominance channel. It can be understood that a picture usually corresponds to one luminance channel and two chrominance channels, and thus the target channel can be any one of the three channels.

In other embodiments, in the case that the channel where the current coding block is located is the chrominance channel, the target channel can also be represented as a luminance channel. For example, assuming that the channel where the first pixel point (the pixel point in the current coding block) is located is the chrominance channel, when obtaining a bit depth of the first pixel point in the chrominance channel, a bit depth of the first pixel point in the luminance channel can be obtained instead of the bit depth of the first pixel point in the chrominance channel.

Step b1-2, a difference between a pixel value of a fourth pixel point and a pixel value of a fifth pixel point is calculated as a second difference value.

The fourth pixel point is a first reconstructed pixel point on a right side of the first pixel point, and the fifth pixel point is a first reconstructed pixel point on an upper side of the fourth pixel point.

For example, assuming that the coordinates of the first pixel point in the target channel are (pic_x, pic_y), coordinates of the fourth pixel point in the target channel are (pic_x+1, pic_y) and coordinates of the fifth pixel point in the target channel are (pic_x+1, pic_y-1), then the second difference value can satisfy: I[pic_y][pic_x+1]-I[pic_y-1][pic_x+1], where I represents the pixel value of the pixel point (for the reconstructed pixel point, I represents the reconstructed pixel value of the pixel point), I[pic_y][pic_x+1] represents a pixel value of the pixel point (pic_x+1, pic_y) in the target channel, and I[pic_y-1][pic_x+1] represents a pixel value of the pixel point (pic_x+1, pic_y-1) in the target channel.

Step b1-3, an average value of an absolute value of the first difference value and an absolute value of the second difference value is taken as the predicted residual value of the first pixel point.

It can be understood that the first difference value represents a vertical gradient of the second pixel point, and the second difference value represents a vertical gradient of the fourth pixel point, and the second pixel point and the fourth pixel point are the reconstructed pixel points with the shortest distance from the left side and the right side of the first pixel point, respectively, and thus the predicted residual value of the first pixel point (that is, the gradient of the first pixel point) can be determined according to the average value of the gradient of the second pixel point and the gradient of the fourth pixel point.

For example, position information of the first pixel point, the second pixel point, the third pixel point, the fourth pixel point and the fifth pixel point can be shown in FIG. 9. The predicted residual value of the first pixel point can satisfy the following formula (1):

$$\text{PredResiTmp} = (\text{Abs}(I[pic\_y][pic\_x\text{-}1]\text{-}I[pic\_y\text{-}1][pic\_x\text{-}1]) + \text{Abs}(I[pic\_y][pic\_x\text{+}1]\text{-} I[pic\_y\text{-}1][pic\_x\text{+}1]) + 1) >> 1 \qquad \text{formula (1)},$$

where PredResiTmp represents the predicted residual value of the pixel point, Abs represents a function of finding an absolute value, >> represents right shift in binary, +1 represents rounding, >>1 represents right shift by 1 bit in binary and division by 2 in decimal.

Manner 2: the predicted residual value of the first pixel point is determined according to a residual value of one or more reference pixel points of the first pixel point after performing dequantization. The above step S5012 can be realized as the following steps.

Step b2-1, a residual value of the second pixel point after performing dequantization is calculated as the first difference value.

The second pixel point is a first reconstructed pixel point on a left side of the first pixel point.

For example, assuming that the coordinates of the first pixel point in the target channel are (pic_x, pic_y) and coordinates of the second pixel point in the target channel are (pic_x-1, pic_y), then the residual value of the second pixel point after dequantization can be represented as PointCoeffData[pic_y]_[pic_x-1].

It should be noted that for a single pixel point, PointCoeffData represents the residual value of the pixel point after dequantization, and for the current coding block, PointCoeffData represents a residual value matrix of reconstructed pixels included in the current coding block after dequantization.

Step b2-2, a residual value of the fourth pixel point after performing dequantization is calculated as the second difference value.

The fourth pixel point is a first reconstructed pixel point on a right side of the first pixel point.

For example, assuming that the coordinates of the first pixel point in the target channel are (pic_x, pic_y) and coordinates of the fourth pixel point in the target channel are (pic_x+1, pic_y), then the residual value of the fourth pixel point after dequantization can be represented as PointCoeffData[pic_y][pic_x+1].

Step b2-3, an average value of an absolute value of the first difference value and an absolute value of the second difference value is taken as the predicted residual value of the first pixel point.

It can be understood that the first difference value represents the residual value of the second pixel point after performing dequantization and can reflect the gradient of the second pixel point, the second difference value represents the residual value of the fourth pixel point after performing dequantization and can reflect the gradient of the fourth pixel point, and the second pixel point and the fourth pixel point are the reconstructed pixel points with the shortest distance from the left side and the right side of the first pixel point, respectively, and thus the predicted residual value of the first pixel point (that is, the absolute value of the gradient of the first pixel point) can be determined according to the average value of the absolute value of the gradient of the second pixel point and the absolute value of the gradient of the fourth pixel point.

For example, position information of the first pixel point, the second pixel point and the fourth pixel point can be shown in FIG. 9. The predicted residual value of the first pixel point can also satisfy the following formula (2):

$$\text{PredResiTmp} = (\text{Abs}(\text{PointCoeffData}[pic\_y][pic\ x\text{-}1]) + \text{Abs}(\text{PointCoeffData}[pic\_y][\ pic\_x\text{+}1]) + 1) >> 1 \qquad \text{formula (2)}.$$

In some embodiments, in the case that the prediction manner of the first pixel point is to perform prediction according to the reconstructed pixel points on the upper side and the lower side of the pixel point, the reference pixel points of the first pixel point are one or more reconstructed pixel points on the upper side of the first pixel point and one or more reconstructed pixel points on the lower side of the first pixel point, there are two manners to determine the predicted residual value of the first pixel point.

Manner 1: the predicted residual value of the first pixel point is determined according to a difference between the reconstructed values of the reference pixel points of the first pixel point with a predicted value. The above step S5012 can be realized as the following steps.

Step c1-1, a difference between a pixel value of a sixth pixel point and a pixel value of a seventh pixel point is calculated as a third difference value.

The sixth pixel point is a first reconstructed pixel point on an upper side of the first pixel point, and the seventh pixel point is a first reconstructed pixel point on a left side of the sixth pixel point.

For example, assuming that the coordinates of the first pixel point in the target channel are (pic_x, pic_y), coordinates of the sixth pixel point in the target channel are (pic_x, pic_y-1) and coordinates of the seventh pixel point in the target channel are (pic_x-1, pic_y-1), then the third difference value can satisfy: I[pic_y-1][pic_x]-I[pic_y-1][pic_x-1], where I[pic_y-1][pic_x] represents a pixel value of the pixel point (pic_x, pic_y-1) in the target channel, and I[pic_y-1][pic_x-1] represents a pixel value of the pixel point (pic_x-1, pic_y-1) in the target channel.

Step c1-2, a difference between a pixel value of an eighth pixel point and a pixel value of a ninth pixel point is calculated as a fourth difference value.

The eighth pixel point is a first reconstructed pixel point on a lower side of the first pixel point, and the ninth pixel point is a first reconstructed pixel point on a left side of the eighth pixel point.

For example, assuming that the coordinates of the first pixel point in the target channel are (pic_x, pic_y), coordinates of the eighth pixel point in the target channel are (pic_x, pic_y+1) and coordinates of the ninth pixel point in the target channel are (pic_x-1, pic_y+1), then the fourth difference value can satisfy: I[pic_y+1][pic_x]-I[pic_y+1][pic_x-1], where I represents the pixel value of the pixel point (for the reconstructed pixel point, I represents the reconstructed pixel value of the pixel point), I[pic_y+1][pic_x] represents a pixel value of the pixel point (pic_x, pic_y+1) in the target channel, and I[pic_y+1][pic_x-1] represents a pixel value of the pixel point (pic_x-1, pic_y+1) in the target channel.

Step c1-3, an average value of an absolute value of the third difference value and an absolute value of the fourth difference value is taken as the predicted residual value of the first pixel point.

It can be understood that the third difference value represents a horizontal gradient of the sixth pixel point, the fourth difference value represents a horizontal gradient of the eighth pixel point, and the sixth pixel point and the eighth pixel point are the reconstructed pixel points with the shortest distance from the upper side and the lower side of the first pixel point, respectively, and thus the predicted residual value of the first pixel point (that is, the gradient of the first pixel point) can be determined according to the average value of the gradient of the sixth pixel point and the gradient of the eighth pixel point.

For example, position information of the first pixel point, the sixth pixel point, the seventh pixel point, the eighth pixel point and the ninth pixel point can be shown in FIG. 10. The predicted residual value of the first pixel point can satisfy the following formula (3):

$$\text{PredResiTmp=(Abs(I[pic\_y-1][pic\_x]-I[pic\_y-1][pic\_x-1])+Abs(I[pic\_y+1][pic\_x]-\quad I[pic\_y+1][pic\_x-1])+1>>1} \qquad \text{formula (3)}.$$

Manner 2: the predicted residual value of the first pixel point is determined according to a difference between the reconstructed values of the reference pixel points of the first pixel point with a predicted value and the residual values of the reference pixel points of the first pixel point after performing dequantization. The above step S5012 can be realized as the following steps.

Step c2-1, a difference between a pixel value of a sixth pixel point and a pixel value of a seventh pixel point is calculated as a third difference value.

The sixth pixel point is a first reconstructed pixel point on an upper side of the first pixel point, and the seventh pixel point is a first reconstructed pixel point on a left side of the sixth pixel point.

Step c2-2, a residual value of the eighth pixel point after performing dequantization is calculated as the fourth difference value.

The eighth pixel point is a first reconstructed pixel point on a lower side of the first pixel point.

For example, assuming that the coordinates of the first pixel point in the target channel are (pic_x, pic_y) and coordinates of the eighth pixel point in the target channel are (pic_x, pic_y+1), then the residual value of the eighth pixel point after dequantization can be represented as PointCoeffData[pic_y+1][pic_x].

Step c2-3, an average value of an absolute value of the third difference value and an absolute value of the fourth difference value is taken as the predicted residual value of the first pixel point.

It can be understood that since the sixth pixel point is a pixel point outside the current coding block, the residual value of the sixth pixel point after performing dequantization cannot be calculated, and thus the gradient of the sixth pixel point is represented by calculating the difference (that is, the third difference value) between the reconstructed values of the sixth pixel point with the predicted value; the fourth difference value represents the residual value of the eighth pixel point after performing dequantization, and can reflect the gradient of the eighth pixel point. Since the sixth pixel point and the eighth pixel point are the reconstructed pixel points with the shortest distance from the upper side and the lower side of the first pixel point, the predicted residual value of the first pixel point (that is, the absolute value of the gradient of the first pixel point) can be determined according to the average of the absolute value of the gradient of the sixth pixel point and the absolute value of the gradient of the eighth pixel point.

For example, position information of the first pixel point, the sixth pixel point and the eighth pixel point can be shown in FIG. 10. The predicted residual value of the first pixel point can satisfy the following formula (4):

PredResiTmp=(Abs(I[pic_y-1][pic_x]-I[pic_y-1][pic_x-1])+Abs(PointCoeffData[pi c_y+1][pic_x])+1)>>1      formula (4).

In some embodiments, in the case that the prediction manner of the first pixel point is to perform prediction according to one or more reconstructed pixel points on the left side of the pixel point, the reference pixel points of the first pixel point are one or more reconstructed pixel points on the left side of the first pixel point, there are two manners to determine the predicted residual value of the first pixel point.

Manner 1: the predicted residual value of the first pixel point is determined according to a difference between the reconstructed values of the reference pixel points of the first pixel point with a predicted value.

In the case that the predicted residual value of the first pixel point is calculated by using the manner 1, the above step S5012 can have the following two cases.

Case 1: when a horizontal position of the first pixel point in the target channel is not 5, 9 or 13, an absolute value of a difference between the pixel value of the tenth pixel point and the pixel value of the eleventh pixel point is taken as the predicted residual value of the first pixel point.

The tenth pixel point is a first reconstructed pixel point on a left side of the first pixel point, and the eleventh pixel point is a first reconstructed pixel point on a left side of the tenth pixel point.

It can be understood that the difference between the pixel value of the tenth pixel point and the pixel value of the eleventh pixel point represents a horizontal gradient of the tenth pixel point, and the tenth pixel point is the reconstructed pixel point with the shortest distance from the left side of the first pixel point, and thus the predicted residual value of the first pixel point (that is, the gradient of the first pixel point) can be determined according to the horizontal gradient of the tenth pixel point.

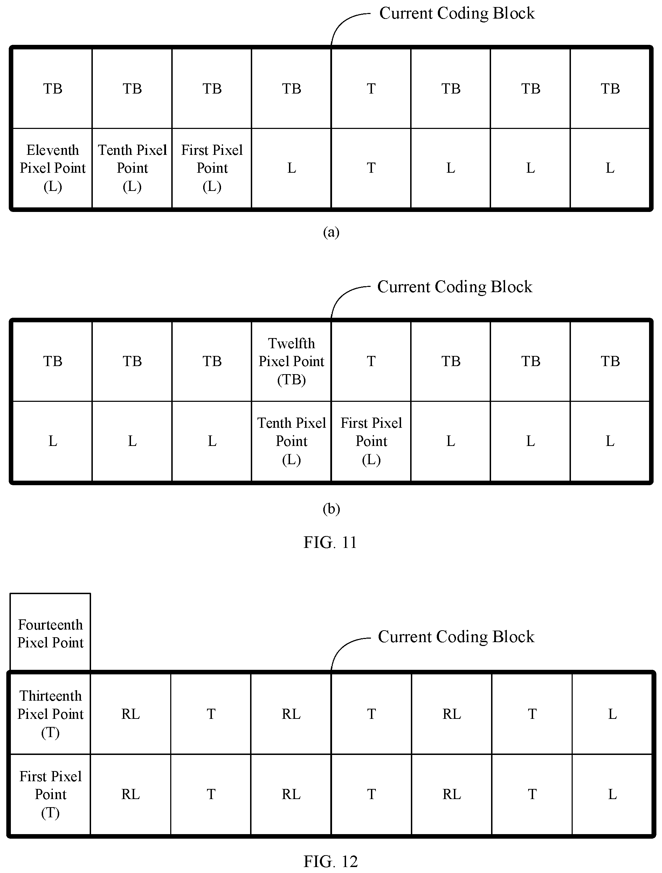

For example, position information of the first pixel point, the tenth pixel point and the eleventh pixel point can be shown in (a) of FIG. 11. Assuming that the coordinates of the first pixel point in the target channel are (pic_x, pic_y), coordinates of the tenth pixel point in the target channel are (pic_x-1, pic_y) and coordinates of the eleventh pixel point in the target channel are (pic_x-2, pic_y), then the predicted residual value of the first pixel can satisfy the following formula (5):

$$PredResiTmp=Abs(I[pic\_y][pic\_x-1]-I[pic\_y][pic\_x-2]) \qquad formula\ (5),$$

where I[pic_y][pic_x-1] represents the pixel value of the pixel point (pic_x-1, pic_y) in the target channel, I[pic_y][pic_x-2] represents the pixel value of the pixel point (pic_x-2, pic_y) in the target channel.

Case 2: when the horizontal position of the first pixel point in the target channel is 5, 9 or 13, an absolute value of a difference between the pixel value of the tenth pixel point and the pixel value of the twelfth pixel point is taken as the predicted residual value of the first pixel point.

The tenth pixel point is a first reconstructed pixel point on a left side of the first pixel point, and the twelfth pixel point is a first reconstructed pixel point on an upper side of the tenth pixel point.

It can be understood that the difference between the pixel value of the tenth pixel point and the pixel value of the twelfth pixel point represents a vertical gradient of the tenth pixel point, and the tenth pixel point is the reconstructed pixel point with the shortest distance from the left side of the first pixel point, and thus the predicted residual value of the first pixel point (that is, the gradient of the first pixel point) can be determined according to the vertical gradient of the tenth pixel point.

It should be noted that as shown in FIG. 8, when the pixel-wise prediction mode of the current coding block is the mode 2, the prediction manner of the fifth pixel point, the ninth pixel point and thirteenth pixel point in a horizontal direction in the current coding block are all "T", that is, prediction is performed according to the one or more reconstructed pixel points on the upper side of the pixel point. Therefore, the fifth pixel point, the ninth pixel point and thirteenth pixel point in the horizontal direction in the current coding block cannot obtain information about the adjacent pixel points of the pixel point in the horizontal direction, and cannot calculate the horizontal gradient, but only the vertical gradient.

Therefore, when the horizontal position of the first pixel point in the target channel is 5, 9 or 13, it is necessary to take the vertical gradient of the first reconstructed pixel point on the left side of the first pixel point (that is, the tenth pixel point) as the predicted residual value of the first pixel point.

For example, position information of the first pixel point, the tenth pixel point and the twelfth pixel point can be shown in (b) of FIG. 11. Assuming that the coordinates of the first pixel point in the target channel are (pic_x, pic_y), the coordinates of the tenth pixel point in the target channel are (pic_x-1, pic_y) and coordinates of the twelfth pixel point in the target channel are (pic_x-1, pic_y-1), then the predicted residual value of the first pixel point can satisfy the following formula (6):

$$PredResiTmp=Abs(I[pic\_y][pic\_x-1]-I[pic\_y-1][pic\_x-1]) \qquad \text{formula (6),}$$

where I represents the pixel value of the pixel point (for the reconstructed pixel point, I represents the reconstructed pixel value of the pixel point), I[pic_y][pic_x-1] represents a pixel value of the pixel point (pic_x-1, pic_y) in the target channel, and I[pic_y-1][pic_x-1] represents a pixel value of the pixel point (pic_x-1, pic_y-1) in the target channel.

Manner 2: the predicted residual value of the first pixel point is determined according to a residual value of one or more reference pixel points of the first pixel point after performing dequantization.

Specifically, the above step S5012 can be realized by taking an absolute value of a residual value of the tenth pixel point after performing dequantization as the predicted residual value of the first pixel point. The tenth pixel point is a first reconstructed pixel point on a left side of the first pixel point.

It can be understood that the residual value of the tenth pixel point after performing dequantization can reflect the gradient of the tenth pixel point, and the tenth pixel point is the reconstructed pixel point with the shortest distance from the left side of the first pixel point, and thus the predicted residual value of the first pixel point (that is, the absolute value of the gradient of the first pixel point) can be determined according to the absolute value of the gradient of the tenth pixel point.

For example, the position information of the first pixel point and the tenth pixel point can be shown in (b) of FIG. 11. Assuming that the coordinates of the first pixel point in the target channel are (pic_x, pic_y) and the coordinates of the tenth pixel point in the target channel are (pic_x-1, pic_y), then the predicted residual value of the first pixel point can satisfy the following formula (7):

$$PredResiTmp=Abs(PointCoeffData[pic\_y][pic\_x-1]) \qquad \text{formula (7),}$$

where PointCoeffData[pic_y][pic_x-1] represents the residual value of the pixel point (pic_x-1, pic_y) after dequantization.

In some embodiments, in the case that the prediction manner of the first pixel point is to perform prediction according to one or more reconstructed pixel points on the upper side of the pixel point, the reference pixel points of the first pixel point are one or more reconstructed pixel points on the upper side of the first pixel point, there are two manners to determine the predicted residual value of the first pixel point.

Manner 1: the predicted residual value of the first pixel point is determined according to a difference between the reconstructed values of the reference pixel points of the first pixel point with a predicted value.

Specifically, the above step S5012 can be realized by taking an absolute value of a difference between a pixel value of a thirteenth pixel point and a pixel value of a fourteenth pixel point as the predicted residual value of the first pixel point.

The thirteenth pixel point is a first reconstructed pixel point on an upper side of the first pixel point, and the fourteenth pixel point is a first reconstructed pixel point on an upper side of the thirteenth pixel point.

It can be understood that an absolute value of the difference between the pixel value of the thirteenth pixel point and the pixel value of the fourteenth pixel point represents a vertical gradient of the thirteenth pixel point, and the thirteenth pixel point is the reconstructed pixel point with the shortest distance from the upper side of the first pixel point, and thus the predicted residual value of the first pixel point (that is, the gradient of the first pixel point) can be determined according to the vertical gradient of the thirteenth pixel point.

For example, position information of the first pixel point, the thirteenth pixel point and the fourteenth pixel point can be shown in FIG. 12. Assuming that the coordinates of the first pixel point in the target channel are (pic_x, pic_y), coordinates of the thirteenth pixel point in the target channel are (pic_x, pic_y-1) and coordinates of the fourteenth pixel point in the target channel are (pic_x, pic_y-2), then the predicted residual value of the first pixel point can satisfy the following formula (8):

$$PredResiTmp=Abs(I[pic\_y-1][pic\_x]-I[pic\_y-2][pic\_x]) \qquad \text{formula (8),}$$

where I[pic_y-1][pic_x] represents the pixel value of the pixel point (pic_x, pic_y-1) in the target channel, and I[pic_y-2][pic_x] represents a pixel value of the pixel point (pic_x, pic_y-2) in the target channel.

Manner 2: the predicted residual value of the first pixel point is determined according to a residual value of one or more reference pixel points of the first pixel point after performing dequantization.

Specifically, the above step S5012 can be realized by taking an absolute value of a residual value of the thirteenth pixel point after performing dequantization as the predicted residual value of the first pixel point. The thirteenth pixel point is a first reconstructed pixel point on the upper side of the first pixel point.

It can be understood that the residual value of the thirteenth pixel point after performing dequantization can reflect the gradient of the thirteenth pixel point, and the thirteenth pixel point is the reconstructed pixel point with the shortest distance from the upper side of the first pixel point, and thus the predicted residual value of the first pixel point (that is, the absolute value of the gradient of the first pixel point) can be determined according to the absolute value of the gradient of the thirteenth pixel point.

For example, the position information of the first pixel point and the thirteenth pixel point can be shown in FIG. 12. Assuming that the coordinate of the first pixel point in the target channel is (pic_x, pic_y) and the coordinate of the thirteenth pixel point in the target channel is (pic_x, pic_y-1), then the predicted residual value of the first pixel point can satisfy the following formula (9):

$$\text{PredResiTmp}=\text{Abs}(\text{PointCoeffData}[\text{pic\_y-1}][\text{pic\_x}]) \qquad \text{formula (9)},$$

where PointCoeffData[pic_y-1][pic_x] represents a residual value of the pixel point (pic_x, pic_y-1) after dequantization.

S502, a target quantization parameter (QP) value of the first pixel point is determined according to the predicted residual value of the first pixel point.

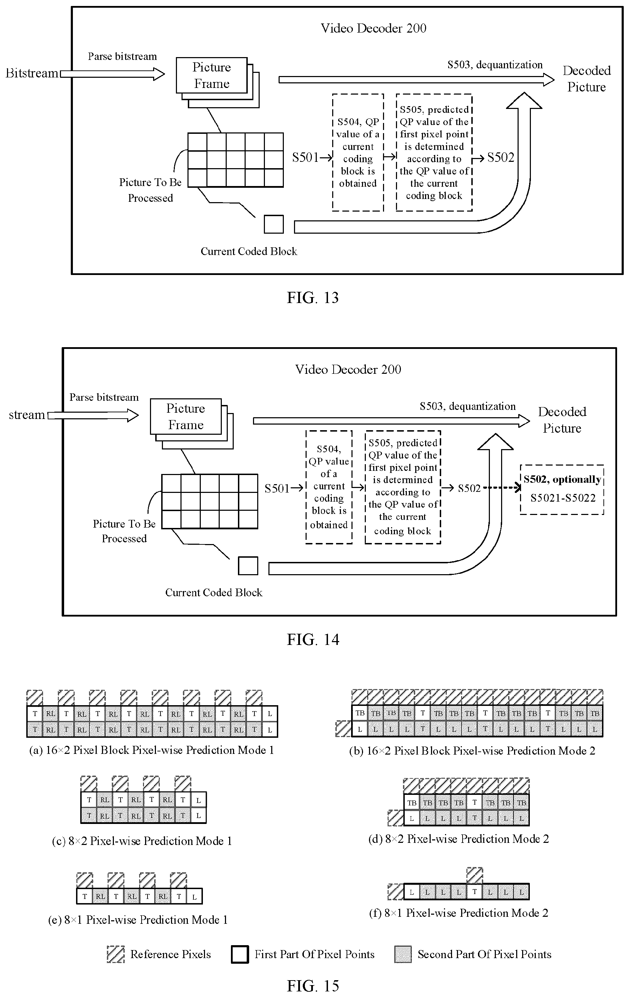

In some embodiments, combining with FIG. 5, as shown in FIG. 13, before determining the target QP value of the first pixel point according to the predicted residual value of the first pixel point, the above method further includes the following steps S504 and S505.

S504, a QP value of a current coding block is obtained.

In an implementation, the QP value of the current coding block can be parsed from a bitstream. In near lossless compression technologies, a probability of a small QP is higher than a probability of a large QP, and thus the video encoder can directly encode the QP value of a coding block using a truncated unary code, a truncated Rice code or an exponential Columbus code, so that the video decoder can parse the bitstream to obtain the QP value of the coding block.

In another implementation, the QP value of the current coding block can be obtained based on a predicted QP value and a QP offset of the current coding block. For example, the QP value of the current coding block can be obtained through the following manner 1 or manner 2.

A process of the manner 1 includes S1 to S3.

S1, a predicted QP value of a current coding block is obtained.

Optionally, the predicted QP value of the current coding block can be calculated according to QP values of surrounding blocks of the current coding block.

For example, the predicted QP value of the current coding block can be determined according to a QP value of a reconstructed block on a left side of the current coding block and a QP value of a reconstructed block on an upper side of the current coding block, for example, predQP=(QPA+QPB+1)>>1, where predQP represents the predicted QP value of the current coding block, QPA represents the reconstructed block on the left side of the current coding block, QPB represents the reconstructed block on the upper side of the current coding block, +1 represents rounding, and >>1 represents right shift by 1 bit, that is, division by 2.

S2, a bitstream is parsed to obtain a QP offset of the current coding block.

It can be understood that in the process of the video coding, the video encoder determines the predicted QP of the current coding block and further determines a difference between a real QP value of the current coding block and the predicted QP value to obtain the QP offset (which can be referred to as deltaQP) of the current coding block, and then encodes the QP offset with a variable length code and transmits the QP offset to the video decoder through a bitstream, so that the video decoder can parse the bitstream to obtain the QP offset of the current coding block.

S3, a sum of the predicted QP value and the QP offset of the current coding block is taken as the QP value of the current coding block.

That is, QP=predQP+deltaQP, where QP represents the QP value of the current coding block, predQP represents the predicted QP value of the current coding block, and deltaQP represents the QP offset of the current coding block.

A process of the manner 2 includes S10 to S30.

S10, a predicted QP value of a current coding block is obtained.

For the description of S10, refer to the related description of S1, which will not be repeated here.

S20, a QP offset of the current coding block is determined according to derived information of the current coding block.

The derived information includes at least one of the following information: flatness information of the current coding block, a remaining space of a bitstream buffer or distortion constraint information.

It should be understood that in the process of the video coding, the video encoder uses a code control algorithm to derive the QP offset of the current coding block according to the derived information of the current coding block. However, the video encoder does not transmit the QP offset in the bitstream, and thus in the process of the video decoding, the video decoder uses the same method as the video encoder to derive the QP offset of the current coding block. The process of deriving the QP offset of the current coding block according to at least one of the flatness information of the current coding block, the remaining space of the bitstream buffer or the distortion constraint information in S20 is the conventional technology, specific details can refer to relevant contents of deriving the QP offset in the conventional technology, and the embodiments of the present disclosure will not be described in detail.

S30, a sum of the predicted QP value and the QP offset of the current coding block is taken as the QP value of the current coding block.

In the embodiments of the present disclosure, the QP offset of the current coding block can also be obtained according to other additional information, for example, the QP offset of the current coding block can be deduced according to a QP of a previous encoded block, a number of encoded bits of the previous encoded block (prevBlockRate), a target rate (targetRate), the flatness information of the current coding block and a filling degree of acurrent bitstream buffer (rcFullness).

S505, a predicted QP value of the first pixel point is determined according to the QP value of the current coding block.

The predicted QP value of the first pixel point is the QP value of the current coding block.

In the embodiments of the present disclosure, the QP value of the current coding block obtained is taken as an initial QP value (that is, the predicted QP value) of each pixel point in the current coding block, and based on this, the predicted QP value is adjusted or not, so as to obtain the QP value of each pixel point.

Based on the above S503 and S504, as shown in FIG. 14, determining the target quantization parameter (QP) value of the first pixel point according to the predicted residual value of the first pixel point (that is, S502) specifically includes S5021 and S5022.

S5021, in response to the first pixel point being a target pixel point in the current coding block, the predicted QP value of the first pixel point is adjusted according to the predicted residual value to obtain the target QP value of the first pixel point.

The target QP value is less than the predicted QP value.

The target pixel point is a preset pixel point for adjusting the QP value. In the embodiments of the present disclosure, the target pixel point is one or more designated pixel points in the current coding block, which can be understood as pixel points whose QP values need to be adjusted or candidate pixel points. For the candidate pixel points, a QP adjustment strategy is performed.

In an embodiment, all pixel points in the current coding block can be target pixel points, that is, the preset pixel points for adjusting the QP value.

As an example, the current coding block includes at least a first part of pixel points and/or a second part of pixel points, where the first part of pixel points are set as pixel points whose QP values do not need to be adjusted, the second part of pixel points are set as pixel points whose QP values need to be adjusted, and the target pixel point is any one or more pixel points in the second part of pixel points.

The first part of pixel points and the second part of pixel points are determined according to a pixel-wise prediction mode of the current coding block. For example, as shown in FIG. 15, the pixel-wise prediction mode of the current coding block includes: mode 1 and mode 2. Specifically, in the case that a size of the current coding block is 16×2, the pixel-wise prediction modes of the current coding block are shown in (a) and (b) of FIG. 15, respectively; in the case that the size of the current coding block is 8×2, the pixel-wise prediction modes of the current coding block are shown in (c) and (d) of FIG. 15, respectively; in the case that the size of the current coding block is 8×1, the pixel-wise prediction modes of the current coding block are shown in (e) and (f) of FIG. 15, respectively; and then in the case that the pixel-wise prediction modes of the current coding block are mode 1 and mode 2, respectively, the second part of pixel points in the current coding block can be as shown in Table 1 below.

Table 1

| Pixel-wise prediction mode | Second part of pixel points |
|---|---|
| Mode 1 | T not in a first row, and all RLs |
| Mode 2 | T not in a first row, TB not in a first column, and L not in the first column |

As can be seen from FIG. 15, in the case that the pixel-wise prediction mode of the current coding block is the mode 1, the case that the pixel-wise prediction mode of the current coding block is the mode 1, the second part of pixel points include at least one of the following: a first type of pixel points (RL) or a fourth type of pixel points (T) that are not a first row, where the first type of pixel points are pixel points that prediction is performed according to reconstructed pixel points on the left side and the right side of the pixel point, and the fourth type of pixel points are pixel points that prediction is performed according to one or more reconstructed pixel points on the upper side of the pixel point.

In the case that the pixel-wise prediction mode of the current coding block is the mode 2, the second part of pixel points include at least one of the following: a second type of pixel points (TB) that are not a first column, a third type of pixel points (L) that are not a first column and the fourth type of pixel points (T) that are not the first row, where the second type of pixel points are pixel points that prediction is performed according to reconstructed pixel points on the upper side and the lower side of the pixel point, and the third type of pixel points are pixel points that prediction is performed according to one or more reconstructed pixel points on the left side of the pixel point.

Therefore, after determining that the first pixel point is the target pixel point in the current coding block, the predicted QP value of the first pixel point can be adjusted according to the predicted residual value of the first pixel point to obtain the target QP value of the first pixel point.

In the embodiments of the present disclosure, a QP adjustment parameter table can be set for the first pixel point in the current coding block. For example, Table 2 below shows some parameters required for adjusting the QP value.

Table 2

| Parameter Name | Meaning |
|---|---|
| info | Information of reconstructed pixel points surrounding the current pixel point |
| resiThres | Threshold of information of reconstructed pixel points |
| adjustMaxQp | Adjustable maximum QP value |
| orgQp | Original QP (or predicted QP, usually the QP value of the current coding block) of the current pixel point |
| jndQp | QP corresponding to just noticeable distortion |
| finalQp | Adjusted QP, that is, the final QP used by the current pixel point |
| offset | QP offset value, which can be zero, positive integer or negative integer |

Info can be one or more reconstruction residual values of one or more reconstructed pixel points surrounding the current pixel point. For example, the reconstruction residual values of the reconstructed pixel points include: residual values of the reconstructed pixel points after dequantization, or a difference between reconstructed values of the reconstructed pixel points with a predicted value.

Specifically, the above step S5021 can be realized as the following steps.

Step d1, a first threshold, a second threshold and a third threshold are determined.

The first threshold is a QP value corresponding to just noticeable distortion (that is, jndQp in Table 2), the second threshold is an adjustable maximum QP value (that is, adjustMaxQp in Table 2), and the third threshold is a threshold of reconstructed pixel information (that is, resiThres in Table 2).

Optionally, the QP value corresponding to just noticeable distortion (the first threshold) is determined according to a bit depth of the first pixel point in a target channel or a channel index of the first pixel point. In the case that the target channel is a chrominance channel, the QP value corresponding to just noticeable distortion (the first threshold) can also be determined according to a bit depth of the first pixel point in a luminance channel. For example, the QP value corresponding to just noticeable distortion is positively correlated with the bit depth of the first pixel point in the target channel.

Optionally, the adjustable maximum QP value (the second threshold) is determined according to one or more of the bit depth of the first pixel point in the target channel, the channel index of the first pixel point and a filling degree of a bitstream buffer. In the case that the target channel is the chrominance channel, the adjustable maximum QP value (the second threshold) can also be determined according to the bit depth of the first pixel point in the luminance channel. For example, the adjustable maximum QP value is positively correlated with the bit depth of the first pixel point in the luminance channel, and negatively correlated with the filling degree of the bitstream buffer.

Optionally, the threshold of reconstructed pixel information (the third threshold) is determined according to one or more of the bit depth of the first pixel point in the target channel, the channel index of the first pixel point, the filling degree of the bitstream buffer and the texture complexity of the current coding block. In the case that the target channel is the chrominance channel, the threshold of reconstructed pixel information (the third threshold) can also be determined according to the bit depth of the first pixel point in the luminance channel. For example, the threshold of reconstructed pixel information is positively correlated with the bit depth of the first pixel point in the luminance channel.

As a possible implementation, firstly, the bit depth of the first pixel point in the target channel is adjusted, and a bit depth index of the first pixel point in the target channel is determined; further, the QP value corresponding to just noticeable distortion, the adjustable maximum QP value and the threshold of reconstructed pixel information are respectively determined according to the bit depth index of the first pixel point in the target channel.

For example, the bit depth index of the first pixel point in the target channel satisfies the following formula (10):

$$bdIdx=Clip3(BitDepth[component]-8, 0, 8) \qquad \text{formula (10)},$$

where bdIdx represents the bit depth index of the first pixel point in the target channel, BitDepth[component] represents the bit depth of the first pixel point in the target channel, and Clip is a clipping function.

It can be understood that an index value of the bit depth of the first pixel point in the target channel is adjusted from 8 to 16 to 0 to 8 through the above formula (10), which is convenient for processing.

Taking an example that the QP value corresponding to just noticeable distortion (the first threshold) is determined according to the bit depth of the first pixel point in the target channel, the QP value corresponding to just noticeable distortion (the first threshold) can satisfy the following formula (11):

$$jndQp=(bdIdx<<2)+16 \qquad \text{formula (11)},$$

where << represents left shift in binary, <<2 represents left shift by 2 bits in binary and multiply by 4 in decimal.

Taking an example that the adjustable maximum QP value (the second threshold) is determined according to the bit depth of the first pixel point in the target channel, the adjustable maximum QP value (the second threshold) can satisfy the following formula (12):

$$adjustMaxQp= ((bdIdx>>1)<<3)+32 \qquad \text{formula (12)},$$

where >> represents right shift in binary, >>1 represents right shift by 1 bit in binary and division by 2 in decimal, <<3 represents left shift by 3 bits in binary and multiply by 8 in decimal.

Taking an example that the threshold of reconstructed pixel information (the third threshold) is determined according to the bit depth of the first pixel point in the target channel, the threshold of reconstructed pixel information (the third threshold) can satisfy the following formula (13):

$$resiThres=10<<(bdIdx>>1) \qquad \text{formula (13)}.$$

Further, it can be determined whether to adjust the predicted QP value of the first pixel point according to the first threshold, the second threshold and the third threshold. A specific description is shown in step d2.

Step d2, in response to the predicted QP value of the first pixel point being greater than or equal to a first threshold and less than or equal to a second threshold and the predicted residual value of the first pixel point being less than or equal to a third threshold, the predicted QP value of the first pixel point is adjusted to obtain the target QP value; and otherwise, taking the predicted QP value of the first pixel point as the target QP value of the first pixel point.

In some embodiments, in the case that the predicted QP value of the first pixel point and the predicted residual value of the first pixel point satisfy the above conditions, adjusting the predicted QP value of the first pixel point to obtain the target QP value of the first pixel point can be realized as: taking a larger value of a QP value obtained by subtracting a preset offset from the predicted QP value and the QP value corresponding to just noticeable distortion as the target QP value.

The preset offset can be determined according to one or more of the bit depth of the first pixel point in the target channel, the channel index of the first pixel point, the filling degree of the bitstream buffer and the texture complexity of the current coding block. In the case that the target channel is the chrominance channel, the preset offset can also be determined according to the bit depth of the first pixel point in the luminance channel.

For example, the target QP value of the first pixel point satisfies the following formula (14):

$$PixelQp=Max(QP[component]-offset, jndQp) \qquad \text{formula (14)},$$

where PixelQp represents the target QP value of the first pixel point (that is, finalQp in Table 2), QP[component] represents the QP value of the current coding block where the first pixel point is located, QP[component] can be used as the predicted QP value of the first pixel point (that is, orgQp in Table 2), offset represents the preset offset (that is, the QP offset value), jndQp represents the QP value corresponding to just noticeable distortion.

It can be understood that the predicted residual value reflects the gradient of the first pixel point, that is, the predicted residual value can reflect the complexity (for example, texture characteristics) of the first pixel point, and thus in the case that the predicted residual value of the first pixel point is less than or equal to the threshold of the reconstructed pixel information, it indicates that the first pixel point is a simple pixel point; and in the case that the predicted QP value of the first pixel point is greater than or equal to the QP value corresponding to just noticeable distortion (the QP value reflects detailed information of the spatial compression of the pixel point, and the larger the QP value, the stronger the distortion of the pixel point), it indicates that the distortion of the first pixel point is relatively large. For the simple pixel point, the distortion can be reduced by reducing the QP value, and thus the target QP value can be determined according to the QP value obtained by subtracting the preset offset from the predicted QP value in the embodiments of the present disclosure.

At the same time, in order to avoid adjusting the predicted QP value too much, a larger value of a QP value obtained by subtracting a preset offset from the predicted QP value and the QP value corresponding to just noticeable distortion is taken as the target QP value in the embodiments of the present disclosure, in this way, the predicted QP value is adjusted to reduce the distortion of the first pixel point and the situation that the adjustment amplitude is too large can be avoided, thereby reducing the decoding distortion of the picture frame, and improving the quality of the decoded picture.

S5022, in response to the first pixel point being a pixel point other than the target pixel point in the current coding block, the predicted QP value of the first pixel point is taken as the target QP value.

In the embodiments of the present disclosure, all pixel points except the target pixel point in the current coding block are not adjusted, and it is unnecessary to perform the QP adjustment strategy. For these pixel points, QP values thereof are the QP values of the current coding block.

It can be understood that in the related art, all pixel points in a coding block (for example, the current coding block mentioned above) use the same QP value, that is, in the process of performing dequantizing on the current coding block, the QP value is a QP value of coding block granularity, resulting in relatively large picture distortion. However, in the embodiments of the present disclosure, for a coding block (for example, the current coding block mentioned above), the video decoder determines a QP value of any pixel point in the coding block, that is, in the process of performing dequantizing on the current coding block, the QP value is a QP value of pixel granularity, since a difference between different pixel points in the same coding block is fully considered, an appropriate QP value is assigned to each pixel point, thereby reducing the decoding distortion of the picture frame, that is, improving the dequantization effect (the dequantization effect can be measured by the quality of the decoded picture) of the current coding block.

S503, dequantization is performed on the first pixel point according to the target QP value of the first pixel point.

The dequantization is performed on the first pixel point is specifically to perform dequantization on a level value of the first pixel point. The level value of the first pixel point is obtained by the video decoder by parsing the bitstream.

It can be understood that in the process of coding, the video encoder predicts the current coding block to obtain the residual value (the residual value is the difference between the real value of the current coding block and the predicted value of the current coding block) of the current coding block, which can be referred to as the residual coefficient of the current coding block; and then the residual coefficient of the current coding block is transformed and quantized to obtain the quantized coefficient of the current coding block; or the video encoder does not transform the residual coefficient of the current coding block, but directly quantizes the residual coefficient to obtain a quantized coefficient of the current coding block, which can be referred to as the level value or a quantized residual coefficient. In the embodiments of the present disclosure, for convenience of description, the quantized values are collectively referred to as the level value.

In the embodiments of the present disclosure, performing dequantization on the level value of the first pixel point according to the target QP value of the first pixel point specifically includes: determining a quantization step $Q_{step}$ of the first pixel point according to the target QP value of the first pixel point; and then, for a selected combination of quantizers, performing dequantization on the level value of the first pixel point using the $Q_{step}$ of the first pixel point.

Optionally, the quantizer is a uniform quantizer or a non-uniform quantizer, and the combination of quantizers is determined by tag information carried by the bitstream.

It should be understood that the video decoder can determine $Q_{step}$ through at least one method of formula derivation or table lookup according to the QP value. Three possible implementation methods are provided below.

Method 1: $Q_{step} = a * QP + b$, where a and b represent preset parameters, for example, a has a value of 2, and b has a value of 1.

Method 2: $Q_{step} = 2^T$, where T represents an integer related to the QP value, for example, T = (QP - 6)/4.

Method 3: $Q_{step} = 2^{(QP+offset)/octave}$, where octave represents a rank of QP, that is, a value of $Q_{step}$ doubles every time a value of QP increases octave, and octave is usually selected as 6 or 8, and offset represents an integer offset value.

Optionally, quantization and dequantization can be realized by using the traditional scalar quantization method in H.265 described below.

$$\text{Quantization: } l = \text{sign}(c) * \text{floor}\left(\frac{|c|}{Q_{step}} + f\right),$$

and

$$\text{Dequantization:} \quad c' = l * Q_{step},$$

where l represents the level value obtained after quantization, and c represents a residual coefficient to be quantized (the residual coefficient can be a residual coefficient in a transform domain, that is, a transformed residual coefficient; or the residual coefficient can be a residual coefficient in a pixel domain, that is, the residual value), $Q_{step}$ represents the quantization step, f represents a parameter for controlling rounding, $f \in [0,1)$ ; sign represents a sign function, floor represents a floor function, and c'represents a value after dequantization.

It can be understood that the larger the QP value, the larger the $Q_{step}$ value, the coarser the quantization, the greater the picture distortion caused by quantization, and the smaller the code rate of coefficient coding.

[0, 1 - f) represents a quantization dead zone, and the parameter f is related to a length of the quantization dead zone. The smaller the f is, the longer the quantization dead zone is, and the closer the level value after quantization is to zero. When f = 0.5, the quantization formula and the dequantization formula mentioned above are equivalent to rounding, and the quantization distortion is minimized. When f < 0.5, the smaller the f is, the greater the quantization distortion is, and the smaller the code rate of coefficient coding is. In H.265, for I picture, f = 1/3, and for B/P picture, f = 1/6.

For example, a quantization formula or a dequantization formula of the uniform quantizer can refer to the quantization formula and the dequantization formula mentioned above, and the parameter f can be taken as the following mode.

Mode 1: f can be 0.5 or other fixed value.

Mode 2: f can be adaptively determined according to the QP value, the prediction mode and whether to transform.

To sum up, it is a description of the picture decoding process. According to the picture decoding method provided in the embodiments of the present disclosure, a video decoder may determine the predicted residual value (reflecting the gradient of the first pixel point) of each pixel point according to the prediction manner (the prediction manner is configured to indicate the position of one or more reconstructed pixel points referenced when performing prediction on the pixel point) of each pixel point in the coding block, then determine a QP value of a pixel point granularity for each pixel point in the coding block, and perform dequantization on each pixel point according to the QP value of each pixel point, that is, dequantization is performed pixel by pixel, and thus the decoding distortion of picture frames may be reduced in the case of ensuring a certain compression rate, and the authenticity and accuracy of picture decoding may be improved.

Correspondingly, in the picture coding method, the video encoder first obtains the QP, the Qstep and the residual coefficient of the pixel point; then adaptively selects the quantizer to perform quantization on the residual coefficient; and finally adjusts the quantization coefficient to obtain a final level value, thereby realizing the coding of picture frames.

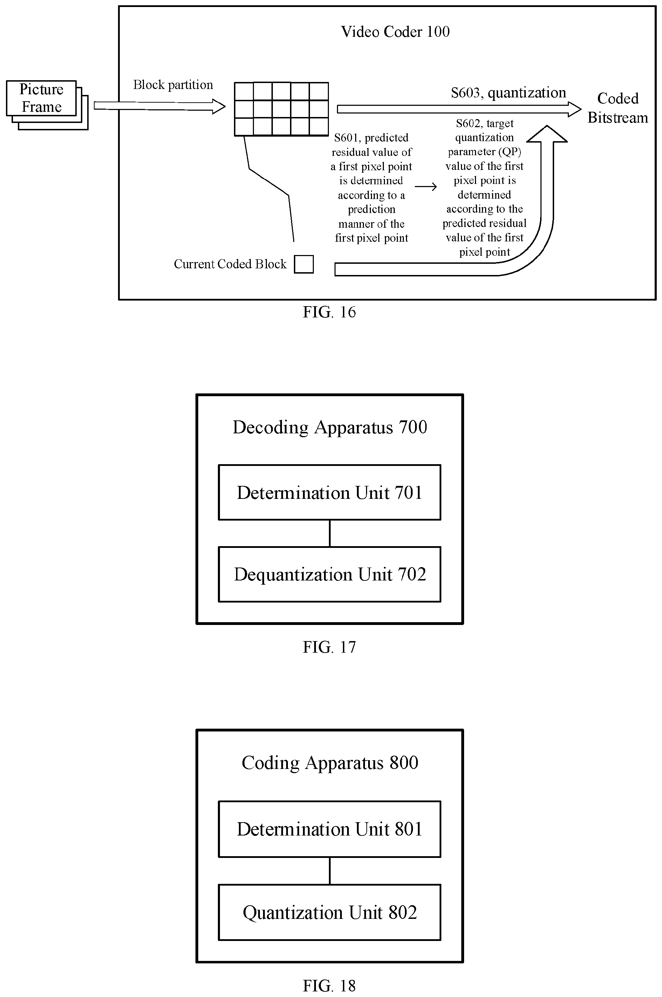

On the basis of the video encoder 100 shown in FIG. 2, the present disclosure further provides a picture coding method. As shown in FIG. 16, FIG. 16 is a schematic flowchart of a picture coding method according to an embodiment of the present disclosure. The picture coding method can be performed by the video encoder 100 or by a coding device (for example, the coding device 10 shown in FIG. 1) that supports the functions of the video encoder 100. Here, taking the implementation of the picture coding method by the video encoder 100 as an example to explain. The picture coding method includes the following steps.

S601, a predicted residual value of a first pixel point is determined according to a prediction manner of the first pixel point.

The predicted residual value is configured to reflect a gradient of the first pixel point, the prediction manner is configured to indicate a position of one or more reconstructed pixel points referenced when performing prediction on a pixel point, and the first pixel point is any pixel point in a current coding block.

It should be noted that the process of determining the predicted residual value of the first pixel point in S601 can refer to the specific implementation process of the aforementioned step S501, which will not be repeated here.

S602, a target quantization parameter (QP) value of the first pixel point is determined according to the predicted residual value of the first pixel point.

It should be noted that the process of determining the target QP value of the first pixel point in S602 can refer to the specific implementation process of the aforementioned step S502, which will not be repeated here.

S603, quantization is performed on the first pixel point according to the target QP value of the first pixel point.

It should be noted that the quantization shown in FIG. 16 is the inverse process of the dequantization shown in FIG. 5. For the quantization using the target QP value in the picture coding method, refer to the corresponding processes in the above picture decoding methods in FIG. 5 to FIG. 15, which will not be repeated here.

To sum up, according to the picture coding method provided in the embodiments of the present disclosure, a video encoder can determine the predicted residual value (reflecting the gradient of the first pixel point) of each pixel point according to the prediction manner (the prediction manner is configured to indicate a position of one or more reconstructed pixel points referenced when performing prediction on the pixel point) of each pixel point in the coding block, then determine a QP value of a pixel point granularity for each pixel point in the coding block, and perform quantization on each pixel point according to the QP value of each pixel point, that is, quantization is performed pixel by pixel, and thus the decoding distortion of picture frames may be reduced in the case of ensuring a certain compression rate, and the authenticity and accuracy of picture decoding may be improved.

It can be understood that in order to realize the functions in the above embodiments, the video encoder/video decoder includes hardware structures and/or software modules corresponding to performing various functions. A person skilled in the art should easily realize that units and method steps of the various examples in the present disclosure can be implemented in the form of hardware or a combination of hardware and computer software. A function is performed as hardware or computer software driving hardware depends on particular application scenarios and design constraints of the technical solution.

FIG. 17 is a schematic structural diagram of a picture decoding apparatus according to an embodiment of the present disclosure. The picture decoding apparatus 700 includes a determination unit 701 and a dequantization unit 702. The picture decoding apparatus 700 can be used to realize the functions of the video decoder or the decoding device in the picture decoding method of the above embodiments, and thus can also achieve the beneficial effects of the picture decoding method of the above embodiments. In the embodiment of the present disclosure, the picture decoding apparatus 700 may be the decoding device 20 or the video decoder 200 as shown in FIG. 1, the video decoder 200 as shown in FIG. 3, or a module (for example, a device) applied to the decoding device 20 or the video decoder 200.

The determination unit 701 and the dequantization unit 702 are configured to implement the picture decoding method provided in any one of the embodiments in FIG. 5 to FIG. 15. Detailed descriptions of the determination unit 701 and the dequantization unit 702 can be directly obtained by referring to the relevant descriptions in the method embodiments shown in FIG. 5 to FIG. 15.

For example, the determination unit 701 can be configured to determine a predicted residual value of a first pixel point according to a prediction manner of the first pixel point, where the predicted residual value is configured to reflect a gradient of the first pixel point, the prediction manner is configured to indicate a position of one or more reconstructed pixel points referenced when performing prediction on a pixel point, and the first pixel point is any pixel point in a current coding block.

The determination unit 701 can be further configured to determine a target quantization parameter (QP) value of the first pixel point according to the predicted residual value of the first pixel point.

The dequantization unit 702 can be configured to perform dequantization on the first pixel point according to the target QP value of the first pixel point.

FIG. 18 is a schematic structural diagram of a picture coding apparatus according to an embodiment of the present disclosure. The picture coding apparatus 800 includes a determination unit 801 and a quantization unit 802. The picture coding apparatus 800 can be used to realize the functions of the video encoder or the coding device in the picture coding method of the above embodiments, and thus can also achieve the beneficial effects of the picture coding method of the above embodiments. In the embodiment of the present disclosure, the picture coding apparatus 800 may be the coding device 10 or the video encoder 100 as shown in FIG. 1, the video encoder 100 as shown in FIG. 2, or a module (for example, a device) applied to the coding device 10 or the video encoder 100.

The determination unit 801 and the quantization unit 802 are configured to implement the picture coding method provided in the embodiment in FIG. 16. Detailed descriptions of the determination unit 801 and the quantization unit 802 can be directly obtained by referring to the relevant descriptions in the method embodiments shown in FIG. 5 to FIG. 16.

For example, the determination unit 801 can be configured to determine a predicted residual value of a first pixel point according to a prediction manner of the first pixel point, where the predicted residual value is configured to reflect a gradient of the first pixel point, the prediction manner is configured to indicate a position of one or more reconstructed pixel points referenced when performing prediction on a pixel point, and the first pixel point is any pixel point in a current coding block.

The determination unit 801 can be further configured to determine a target quantization parameter (QP) value of the first pixel point according to the predicted residual value of the first pixel point.

The quantization unit 802 can be configured to perform quantization on the first pixel point according to the target QP value of the first pixel point.

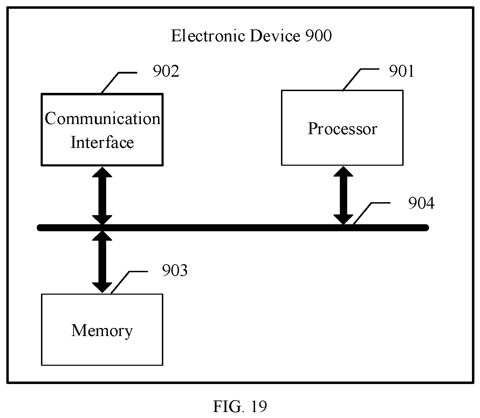

The present disclosure further provides an electronic device, as shown in FIG. 19. FIG. 19 is a schematic structural diagram of an electronic device according to an embodiment of the present disclosure. The electronic device 900 includes a processor 901 and a communication interface 902. The processor 901 and the communication interface 902 are coupled to each other. It can be understood that the communication interface 902 can be a transceiver or an input/output interface. In an embodiment, the electronic device 900 can also include a memory 903 for storing instructions executed by the processor 901 or for storing input data required by the processor 901 to run the instructions or for storing data generated by the processor 901 after running the instructions.

When the electronic device 900 is used to realize the method shown in FIG. 5 to FIG. 15, the processor 901 and the communication interface 902 are configured to perform the functions of the determination unit 701 and the dequantization unit 702.

When the electronic device 900 is used to realize the method shown in FIG. 16, the processor 901 and the communication interface 902 are configured to perform the functions of the determination unit 801 and the quantization unit 802.

Specific connection mediums between the communication interface 902, the processor 901 and the memory 903 are not limited in the embodiments of the present disclosure. In the embodiment of the present disclosure, the communication interface 902, the processor 901 and the memory 903 are connected by a bus 904 in FIG. 19, and the bus 904 is indicated by a thick line in FIG. 9. Connection modes of other components are only for schematic illustration and are not limited. The bus 904 can include an address bus, a data bus, a control bus, and the like. For ease of representation, only a thick line is shown in FIG. 19, but it does not mean that there is only one bus or one type of bus.

The memory 903 may be used to store software programs and modules, for example, program instructions/modules corresponding to the picture decoding method or the picture coding method provided by the embodiments of the present disclosure, and the processor 901 performs various functional applications as well as data processing by executing the software programs and modules stored in the memory 903. The communication interface 902 can be used for signaling or data communication with other devices. The electronic device 900 in the present disclosure may include a plurality of communication interfaces 902.

It can be understood that the processor in the embodiment of the present disclosure can be a central processing unit (CPU), a neural processing unit (NPU) or a graphic processing unit (GPU), or can also be other general-purpose processors, a digital signal processor (DSP), an application specific integrated circuits (ASIC), a field programmable gate array (FPGA) or other programmable logic devices, transistor logic devices, hardware components or any combination thereof. The general-purpose processors may be a microprocessor or any conventional processor.

The method steps in the embodiments of the present disclosure may be realized by means of hardware or by means of a processor executing software instructions. The software instructions may include corresponding software modules, which may be stored in a random access memory (RAM), a flash memory, a read-only memory (ROM), a programmable ROM (PROM), an erasable PROM (EPROM), an electrically EPROM (EEPROM), a register, a hard disk, a removable hard disk, CD-ROM, or any other form of storage media known in the art. An exemplary storage medium is coupled to a processor so that the processor can read information from and write information to the storage medium. Of course, the storage medium may also be an integral part of the processor. The processor and the storage medium may be located in an application specific integrated circuit (ASIC). In addition, the ASIC can be located in a network device or a terminal device. Of course, the processor and the storage medium may also be present as discrete components in the network device or the terminal device.

In the above embodiments, all or some of the foregoing embodiments may be implemented by using software, hardware, firmware, or any combination thereof. When software is used to implement the embodiments, all or some of the embodiments may be implemented in a form of a computer program product. The computer program product includes one or more computer program instructions. When the computer program instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a web site, computer, server, or data center to another web site, computer, server, or data center in a wired (for example, a coaxial cable, an optical fiber, or a digital subscriber line (DSL)) or wireless (for example, infrared, radio, and microwave, or the like) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid-state drive (SSD)), or the like.

Based on the foregoing descriptions of embodiments, a person skilled in the art may clearly understand that, for the purpose of convenient and brief description, division into the foregoing functional modules is used as an example for illustration. In actual application, the foregoing functions can be allocated to different modules and implemented based on a requirement, that is, an internal structure of an apparatus is divided into different functional modules to implement all or some of the functions described above. For a specific working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the modules or units is merely logical function division and may be other division in actual implementation. For example, a plurality of units or components may be combined or integrated into another system, or some features may be ignored or may not be performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objectives of the solutions of the embodiments.

In addition, functional units in embodiments of the present disclosure may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of the present disclosure essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) to perform all or some of the operations of the methods described in embodiments of the present disclosure. The foregoing storage medium includes any medium that can store program code, such as a flash memory, a removable hard disk, a read-only memory, a random access memory, a magnetic disk, or an optical disc.

The foregoing descriptions are merely embodiments of the present disclosure, but are not intended to limit the protection scope of the present disclosure. Any variation or replacement within the technical scope disclosed in the present disclosure shall fall within the protection scope of the present disclosure. Therefore, the protection scope of the present disclosure shall be subject to the protection scope of the claims.

## Claims

1.  A picture decoding method, performed by a decoding device, comprising:

    determining a predicted residual value of a first pixel point according to a prediction manner of the first pixel point, wherein the predicted residual value is configured to reflect a gradient of the first pixel point, the prediction manner is configured to indicate a position of one or more reconstructed pixel points referenced when performing prediction on a pixel point, and the first pixel point is any pixel point in a current coding block;

    determining a target quantization parameter (QP) value of the first pixel point according to the predicted residual value of the first pixel point; and

    performing dequantization on the first pixel point according to the target QP value of the first pixel point.

2.  The method according to claim 1, wherein the prediction manner comprises:

    performing prediction according to reconstructed pixel points on a left side and a right side of the pixel point; and/or

    performing prediction according to one or more reconstructed pixel points on the left side of the pixel point; and/or

    performing prediction according to one or more reconstructed pixel points on an upper side of the pixel point.

3.  The method according to claim 2, wherein the prediction manner of the first pixel point is to perform prediction according to the reconstructed pixel points on the left side and the right side of the pixel point, and determining the predicted residual value of the first pixel point according to the prediction manner of the first pixel point comprises:

    calculating a difference between a pixel value of a second pixel point and a pixel value of a third pixel point as a first difference value, or taking a residual value of the second pixel point after performing dequantization as the first difference value, wherein the second pixel point is a first reconstructed pixel point on a left side of the first pixel point, and the third pixel point is a first reconstructed pixel point on an upper side of the second pixel point;

    calculating a difference between a pixel value of a fourth pixel point and a pixel value of a fifth pixel point as a second difference value, or taking a residual value of the fourth pixel point after performing dequantization as the second difference value, wherein the fourth pixel point is a first reconstructed pixel point on a right side of the first pixel point, and the fifth pixel point is a first reconstructed pixel point on an upper side of the fourth pixel point; and

    taking an average value of an absolute value of the first difference value and an absolute value of the second difference value as the predicted residual value of the first pixel point.

4.  The method according to claim 2, wherein the prediction manner of the first pixel point is to perform prediction according to the one or more reconstructed pixel points on the left side of the pixel point, and determining the predicted residual value of the first pixel point according to the prediction manner of the first pixel point comprises:

taking an absolute value of a difference between a pixel value of a tenth pixel point and a pixel value of an eleventh pixel point as the predicted residual value of the first pixel point, wherein the tenth pixel point is a first reconstructed pixel point on a left side of the first pixel point, and the eleventh pixel point is a first reconstructed pixel point on a left side of the tenth pixel point; or

taking an absolute value of a difference between the pixel value of the tenth pixel point and a pixel value of a twelfth pixel point as the predicted residual value of the first pixel point, wherein the twelfth pixel point is a first reconstructed pixel point on an upper side of the tenth pixel point; or

taking an absolute value of a residual value of the tenth pixel point after performing dequantization as the predicted residual value of the first pixel point.

5. The method according to claim 2, wherein the prediction manner of the first pixel point is to perform prediction according to the one or more reconstructed pixel points on the upper side of the pixel point, and determining the predicted residual value of the first pixel point according to the prediction manner of the first pixel point comprises:

taking an absolute value of a difference between a pixel value of a thirteenth pixel point and a pixel value of a fourteenth pixel point as the predicted residual value of the first pixel point, wherein the thirteenth pixel point is a first reconstructed pixel point on an upper side of the first pixel point, and the fourteenth pixel point is a first reconstructed pixel point on an upper side of the thirteenth pixel point; or

taking an absolute value of a residual value of the thirteenth pixel point after performing dequantization as the predicted residual value of the first pixel point.

6. The method according to claim 1, wherein the predicted residual value of the first pixel point comprises:
a target value or an average value of target values, wherein the target value is a gradient of one or more reconstructed pixel points surrounding the first pixel point, or the target value is an absolute value of the gradient of the one or more reconstructed pixel points surrounding the first pixel point, or the target value is a residual value of the one or more reconstructed pixel points surrounding the first pixel point after performing dequantization, or the target value is an absolute value of the residual value of the one or more reconstructed pixel points surrounding the first pixel point after performing dequantization.

7. The method according to claim 1 or 6, further comprising:

determining a predicted QP value of the first pixel point, wherein the predicted QP value of the first pixel point is a QP value of the current coding block,
wherein the first pixel point is a target pixel point in the current coding block, and determining the target QP value of the first pixel point according to the predicted residual value of the first pixel point comprises:
adjusting the predicted QP value of the first pixel point according to the predicted residual value to obtain the target QP value of the first pixel point, wherein the target pixel point is a preset pixel point for adjusting the QP value.

8. The method according to claim 7, wherein adjusting the predicted QP value of the first pixel point according to the predicted residual value to obtain the target QP value of the first pixel point comprises:

in response to the predicted QP value of the first pixel point being greater than or equal to a first threshold and less than or equal to a second threshold and the predicted residual value of the first pixel point being less than or equal to a third threshold, adjusting the predicted QP value of the first pixel point to obtain the target QP value, wherein the target QP value is less than the predicted QP value; and
otherwise, taking the predicted QP value of the first pixel point as the target QP value of the first pixel point.

9. The method according to claim 8, wherein the first threshold is a QP value corresponding to just noticeable distortion, and the second threshold is an adjustable maximum QP value.

10. The method according to claim 9, wherein adjusting the predicted QP value of the first pixel point to obtain the target QP value of the first pixel point comprises:
taking a larger value of a QP value obtained by subtracting a preset offset from the predicted QP value and the QP value corresponding to just noticeable distortion as the target QP value.

11. The method according to claim 10, wherein

the QP value corresponding to just noticeable distortion is determined according to a bit depth of the first pixel point in a target channel or a channel index of the first pixel point;

the adjustable maximum QP value is determined according to one or more of the bit depth of the first pixel point in the target channel, the channel index of the first pixel point and a filling degree of a bitstream buffer;

the third threshold is determined according to one or more of the bit depth of the first pixel point in the target channel, the channel index of the first pixel point and a texture complexity of the current coding block; and

the preset offset is determined according to one or more of the bit depth of the first pixel point in the target channel, the channel index of the first pixel point, the filling degree of the bitstream buffer and the texture complexity of the current coding block.

**12.** A picture coding method, performed by a coding device, comprising:

determining a predicted residual value of a first pixel point according to a prediction manner of the first pixel point, wherein the predicted residual value is configured to reflect a gradient of the first pixel point, the prediction manner is configured to indicate a position of one or more reconstructed pixel points referenced when performing prediction on a pixel point, and the first pixel point is any pixel point in a current coding block;

determining a target quantization parameter (QP) value of the first pixel point according to the predicted residual value of the first pixel point; and

performing quantization on the first pixel point according to the target QP value of the first pixel point.

**13.** The method according to claim 12, wherein the predicted residual value of the first pixel point comprises:

a target value or an average value of target values, wherein the target value is a gradient of one or more reconstructed pixel points surrounding the first pixel point, or the target value is an absolute value of the gradient of the one or more reconstructed pixel points surrounding the first pixel point, or the target value is a residual value of the one or more reconstructed pixel points surrounding the first pixel point after performing dequantization, or the target value is an absolute value of the residual value of the one or more reconstructed pixel points surrounding the first pixel point after performing dequantization.

**14.** The method according to claim 12 or 13, further comprising:

determining a predicted QP value of the first pixel point, wherein the predicted QP value of the first pixel point is a QP value of the current coding block;

wherein the first pixel point is a target pixel point in the current coding block, and determining the target QP value of the first pixel point according to the predicted residual value of the first pixel point comprises:

adjusting the predicted QP value of the first pixel point according to the predicted residual value to obtain the target QP value of the first pixel point, wherein the target pixel point is a preset pixel point for adjusting the QP value.

**15.** A picture decoding apparatus, comprising: a determination unit and a dequantization unit, wherein

the determination unit is configured to determine a predicted residual value of a first pixel point according to a prediction manner of the first pixel point, wherein the predicted residual value is configured to reflect a gradient of the first pixel point, the prediction manner is configured to indicate a position of one or more reconstructed pixel points referenced when performing prediction on a pixel point, and the first pixel point is any pixel point in a current coding block;

the determination unit is further configured to determine a target quantization parameter (QP) value of the first pixel point according to the predicted residual value of the first pixel point; and

the dequantization unit is configured to perform dequantization on the first pixel point according to the target QP value of the first pixel point.

**16.** A picture coding apparatus, comprising: a determination unit and a quantization unit, wherein

the determination unit is configured to determine a predicted residual value of a first pixel point according to a prediction manner of the first pixel point, wherein the predicted residual value is configured to reflect a gradient of the first pixel point, the prediction manner is configured to indicate a position of one or more reconstructed pixel points referenced when performing prediction on a pixel point, and the first pixel point is any pixel point in a current coding block;

the determination unit is further configured to determine a target quantization parameter (QP) value of the first pixel point according to the predicted residual value of the first pixel point; and

the quantization unit is configured to perform quantization on the first pixel point according to the target QP value of the first pixel point.

17. A video coding system, comprising a coding device and a decoding device, wherein the coding device is communicatively connected to the decoding device, the decoding device is configured to implement the method according to any one of claims 1 to 11, and the coding device is configured to implement the method according to any one of claims 12 to 14.

18. An electronic device, comprising a processor and a memory, wherein the memory is configured to store computer instructions, and the processor is configured to call and run the computer instructions from the memory to implement the method according to any one of claims 1 to 14.

19. A computer readable storage medium, storing a computer program or instruction thereon, when the computer program or instruction is executed by an electronic device, the method according to any one of claims 1 to 14 is implemented.

Video Coding System 1

Coding Device 10

| Video Source 120 | → | Video Encoder 100 | → | Output Interface 140 |

Storage Apparatus 40

30

Decoding Device 20

| display apparatus 220 | ← | video decoder 200 | ← | input interface 240 |

FIG. 1

FIG. 2

Network Entity 42

Coded Video Bitstream → Entropy Decoder 203

Quantization Coefficient → De-quantizer 204

Syntax Element

208

Reference Sample → Intra-frame Predictor 209

Syntax Element

Reference Block → Inter-frame Predictor 210

De-transformer 205

DPB 207 (Reference Picture)

Prediction Block

Residual Block

Loop Filter 206

Reconstructed Picture Block

Decoded Video

211   Video Decoder 200

FIG. 3

Parallel Coding Unit 1          Parallel Coding Unit 2

PG-1

PG-2

PG-3

Independent Coding Unit

RB-1   RB-2

Picture

FIG. 4

37

Video Decoder 200

Parse bitstream

Bitstream → Picture Frame

S503, dequantization → Decoded Picture

Picture To Be Processed

S501, predicted residual value of a first pixel point is determined according to a prediction manner of the first pixel point

S502, target quantization parameter (QP) value of the first pixel point is determined according to the predicted residual value of the first pixel point

Current Coded Block

FIG. 5

Video Decoder 200

Parse bitstream

Bitstream → Picture Frame

S503, dequantization → Decoded Picture

Picture To Be Processed

S501, predicted residual value of a first pixel point is determined according to a prediction manner of the first pixel point

S502, target quantization parameter (QP) value of the first pixel point is determined according to the predicted residual value of the first pixel point

Current Coded Block

S501, optionally S5011-S5012

FIG. 6

(a)　　　　　　　　(b)　　　　　　　　(c)

■ First Pixel Point　　▦ Surrounding Pixel Points 1　　▨ Surrounding Pixel Points 2

FIG. 7

(a) 16×2 Pixel Block Pixel-wise
Prediction Mode 1

(b) 16×2 Pixel Block Pixel-wise
Prediction Mode 2

▨ Reference Pixels     ☐ Pixels In The Current Coding Block

FIG. 8

Current Coding Block

| Third Pixel Point (T) | RL | Fifth Pixel Point (T) | RL | T | RL | T | L |
|---|---|---|---|---|---|---|---|
| Second Pixel Point (T) | First Pixel Point (RL) | Fourth Pixel Point (T) | RL | T | RL | T | L |

FIG. 9

| Seventh Pixel Point | Sixth Pixel Point | | | | | | |
|---|---|---|---|---|---|---|---|
| TB | First Pixel Point (TB) | TB | TB | T | TB | TB | TB |
| Ninth Pixel Point (L) | Eighth Pixel Point (L) | L | L | T | L | L | L |

Current Coding Block

FIG. 10

Current Coding Block

| TB | TB | TB | TB | T | TB | TB | TB |
|---|---|---|---|---|---|---|---|
| Eleventh Pixel Point (L) | Tenth Pixel Point (L) | First Pixel Point (L) | L | T | L | L | L |

(a)

Current Coding Block

| TB | TB | TB | Twelfth Pixel Point (TB) | T | TB | TB | TB |
|---|---|---|---|---|---|---|---|
| L | L | L | Tenth Pixel Point (L) | First Pixel Point (L) | L | L | L |

(b)

FIG. 11

| Fourteenth Pixel Point | | | | | | | |
|---|---|---|---|---|---|---|---|
| Thirteenth Pixel Point (T) | RL | T | RL | T | RL | T | L |
| First Pixel Point (T) | RL | T | RL | T | RL | T | L |

FIG. 12

FIG. 13

FIG. 14

(a) 16×2 Pixel Block Pixel-wise Prediction Mode 1

(b) 16×2 Pixel Block Pixel-wise Prediction Mode 2

(c) 8×2 Pixel-wise Prediction Mode 1

(d) 8×2 Pixel-wise Prediction Mode 2

(e) 8×1 Pixel-wise Prediction Mode 1

(f) 8×1 Pixel-wise Prediction Mode 2

Reference Pixels    First Part Of Pixel Points    Second Part Of Pixel Points

FIG. 15

Video Coder 100

Picture Frame

Block partition

S603, quantization

Coded Bitstream

S601, predicted residual value of a first pixel point is determined according to a prediction manner of the first pixel point

→

S602, target quantization parameter (QP) value of the first pixel point is determined according to the predicted residual value of the first pixel point

Current Coded Block

FIG. 16

Decoding Apparatus 700

Determination Unit 701

Dequantization Unit 702

FIG. 17

Coding Apparatus 800

Determination Unit 801

Quantization Unit 802

FIG. 18

FIG. 19

## INTERNATIONAL SEARCH REPORT

| International application No. |
|---|
| **PCT/CN2023/109231** |

**A.  CLASSIFICATION OF SUBJECT MATTER**

H04N19/124(2014.01)i

According to International Patent Classification (IPC) or to both national classification and IPC

**B.  FIELDS SEARCHED**

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT, ENTXTC, CNKI, VEN: 解码, 编码, 压缩, 量化参数, 像素, 反量化, 残差, 预测, 梯度, decode, code, compression, quantization parameter, QP, pixel, reverse, quantize, predict, residual, gradient

**C.  DOCUMENTS CONSIDERED TO BE RELEVANT**

| Category* | Citation of document, with indication, where appropriate, of the relevant passages | Relevant to claim No. |
|---|---|---|
| PX | CN 116071440 A (HANGZHOU HIKVISION DIGITAL TECHNOLOGY CO., LTD.) 05 May 2023 (2023-05-05)<br>description, paragraphs 0066-0395 | 1-19 |
| X | CN 1953551 A (VIMICRO INTERNATIONAL CORP.) 25 April 2007 (2007-04-25)<br>description, pages 1-7, and figures 1 and 2 | 1, 2, 6, 7, 12-19 |
| A | CN 109361922 A (XI'AN KERUISHENG INNOVATIVE TECHNOLOGY CO., LTD.) 19 February 2019 (2019-02-19)<br>entire document | 1-19 |
| A | CN 109600609 A (XI'AN KERUISHENG INNOVATIVE TECHNOLOGY CO., LTD.) 09 April 2019 (2019-04-09)<br>entire document | 1-19 |
| A | CA 2950168 A1 (QUALCOMM INC.) 17 December 2015 (2015-12-17)<br>entire document | 1-19 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 September 2023** | **09 October 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/109231**

| Patent document cited in search report | | | Publication date (day/month/year) | Patent family member(s) | | | Publication date (day/month/year) |
|---|---|---|---|---|---|---|---|
| CN | 116071440 | A | 05 May 2023 | None | | | |
| CN | 1953551 | A | 25 April 2007 | None | | | |
| CN | 109361922 | A | 19 February 2019 | WO | 2020082485 | A1 | 30 April 2020 |
| | | | | US | 2020137392 | A1 | 30 April 2020 |
| | | | | US | 10645387 | B1 | 05 May 2020 |
| CN | 109600609 | A | 09 April 2019 | None | | | |
| CA | 2950168 | A1 | 17 December 2015 | BR | 112016028722 | A2 | 22 August 2017 |
| | | | | KR | 20170016856 | A | 14 February 2017 |
| | | | | KR | 102384090 | B1 | 06 April 2022 |
| | | | | ES | 2767103 | T3 | 16 June 2020 |
| | | | | WO | 2015191838 | A1 | 17 December 2015 |
| | | | | JP | 2017521920 | A | 03 August 2017 |
| | | | | JP | 6542268 | B2 | 10 July 2019 |
| | | | | EP | 3155815 | A1 | 19 April 2017 |
| | | | | EP | 3155815 | B1 | 16 October 2019 |
| | | | | US | 2015365671 | A1 | 17 December 2015 |
| | | | | US | 10136141 | B2 | 20 November 2018 |
| | | | | HUE | 046926 | T2 | 30 March 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210886294
- CN 202210976078
- CN 202310454346
- CN 202310454020